# EUROPEAN PATENT APPLICATION

(11) **EP 4 644 715 A1**
(43) Date of publication of application: **05.11.2025**
(21) Application number: 23928397.1
(22) Date of filing: 30.11.2023
(51) Int. Cl.: F16C 11/04, H04M 1/02

(54) **ROTATING SHAFT MECHANISM AND TERMINAL DEVICE**

(30) Priority: 22.03.2023 CN 202310355530
(71) Applicant: Honor Device Co., Ltd., Shenzhen, Guangdong 518040 (CN)
(72) Inventor: LIU, Xiaodong, Shenzhen, Guangdong 518040 (CN); CHEN, Ruihao, Shenzhen, Guangdong 518040 (CN); DONG, Shaohong, Shenzhen, Guangdong 518040 (CN)
(74) Representative: Goddar, Heinz J.
(86) International application number: PCT/CN2023/135538
(87) International publication number: WO 2024/193093

(57) **Abstract**

Embodiments of this application relate to the field of foldable electronic device technologies, and provide a rotating shaft mechanism and a terminal device. The rotating shaft mechanism includes a bottom base, at least two connectors, and at least two first swing arms, where the connectors are respectively arranged on two sides of the bottom base; and the first swing arms are respectively arranged on the two sides of the bottom base, and the first swing arms are rotatably connected to the bottom base. In the first swing arm and the connector located on the same side of the bottom base, a first arc-shaped sliding portion is arranged on the first swing arm, a first arc-shaped sliding fit portion is arranged on the connector, and the first arc-shaped sliding portion slidably fits the first arc-shaped sliding fit portion, so that the first swing arm is rotatably connected to the connector. According to the embodiments of this application, a possibility of interference between the first swing arm and a foldable screen of the terminal device when the terminal device is in a folded state may be reduced, which is conductive to further miniaturization of a size of the rotating shaft mechanism and a lightening and thinning design of the terminal device.

## Description

This application claims priority to Chinese Patent Application No. 202310355530.7, filed with the China National Intellectual Property Administration on March 22, 2023 and entitled "ROTATING SHAFT MECHANISM AND TERMINAL DEVICE", which is incorporated herein by reference in its entirety.

### TECHNICAL FIELD

This application relates to the field of foldable electronic device technologies, and in particular, to a rotating shaft mechanism and a terminal device.

### BACKGROUND

A foldable electronic device is an electronic device that can be folded and unfolded, for example, a foldable screen mobile phone, a foldable screen tablet computer, or a foldable screen notebook computer. The foldable electronic device generally includes a device body and a flexible display screen arranged on the device body, where the device body may be folded or unfolded through a foldable mechanism, and the flexible display screen may be bent through a flexibly deformed portion to be folded or unfolded along with the device body.

In some cases, the foldable mechanism still has a large size, and the size can be hardly further reduced while meeting a requirement of performing normal fitting with components such as the flexible display screen. As a result, the foldable electronic device can be hardly lightened and thinned.

### SUMMARY

Embodiments of this application provide a rotating shaft mechanism and a terminal device, which can alleviate the technical problem that a size of a foldable mechanism can be hardly reduced in the related art.

To implement the foregoing objective, the following technical solutions are used in the embodiments of this application:

According to a first aspect, an embodiment of this application provides a rotating shaft mechanism, including:
a bottom base;
at least two connectors, respectively arranged on two sides of the bottom base; and
at least two first swing arms, respectively arranged on the two sides of the bottom base and rotatably connected to the bottom base, where
in the first swing arm and the connector located on the same side of the bottom base, a first arc-shaped sliding portion is arranged on the first swing arm, a first arc-shaped sliding fit portion is arranged on the connector, and the first arc-shaped sliding portion slidably fits the first arc-shaped sliding fit portion, so that the first swing arm is rotatably connected to the connector.

The technical solution in this embodiment of this application at least has the following technical effects or advantages:
In the rotating shaft mechanism provided in this embodiment of this application, the first swing arm is rotatably connected to the connector through slidable fitting between the first arc-shaped sliding portion and the first arc-shaped sliding fit portion, which may be considered as that the first swing arm is rotatably connected to the connector through a virtual shaft; and in a rotation process of the rotating shaft mechanism, a rotation angle of the first swing arm relative to the bottom base and a rotation angle of the connector relative to the bottom base may be different. Therefore, when the rotating shaft mechanism is used in the terminal device, in a process that the terminal device switches from an unfolded state to a folded state, the rotation angle of the first swing arm relative to the bottom base may be designed according to a requirement and does not need to be the same as the rotation angle of the connector relative to the bottom base, so that a possibility of interference between the first swing arm and a foldable screen of the terminal device when the terminal device is in the folded state may be reduced, which is conducive to further miniaturization of a size of the rotating shaft mechanism and a lightening and thinning design of the terminal device.

In some embodiments of the first aspect, the connectors located on the two sides of the bottom base rotate relative to each other based on the bottom base, to cause the rotating shaft mechanism to switch between an unfolded state and a folded state; and when the rotating shaft mechanism switches from the unfolded state to the folded state, the connector drives the first swing arm to rotate relative to the bottom base, and the first arc-shaped sliding portion and the first arc-shaped sliding fit portion slide relative to each other to cause the connector and the first swing arm to rotate relative to each other, where
when the rotating shaft mechanism switches from the unfolded state to the folded state, a rotation angle of the first swing arm rotating relative to the bottom base is less than 90 degrees.

In some embodiments of the first aspect, one of the first arc-shaped sliding portion and the first arc-shaped sliding fit portion is an arc-shaped sliding rail, and the other is an arc-shaped sliding groove; and the first arc-shaped sliding portion is in surface contact with the first arc-shaped sliding fit portion.

In some embodiments of the first aspect, the first swing arm is a synchronization swing arm.

In some embodiments of the first aspect, the rotating shaft mechanism further includes a synchronization assembly, and the first swing arms located on the two sides of the bottom base are connected through the synchronization assembly.

In some embodiments of the first aspect, the rotating shaft mechanism further includes a damping assembly, and the damping assembly is connected to the first swing arm and configured to provide a damping force for the first swing arm.

In some embodiments of the first aspect, the rotating shaft mechanism further includes a first rotating shaft, and the first swing arm is rotatably connected to the bottom base through the first rotating shaft.

In some embodiments of the first aspect, the rotating shaft mechanism further includes at least two second swing arms, the second swing arms are respectively arranged on the two sides of the bottom base, and the second swing arms are rotatably connected to the bottom base, where the second swing arm and the connector located on the same side of the bottom base are rotatably connected.

In some embodiments of the first aspect, the rotating shaft mechanism further includes a second rotating shaft, and the second swing arm and the connector located on the same side of the bottom base are rotatably connected through the second rotating shaft.

In some embodiments of the first aspect, in the second swing arm and the connector located on the same side of the bottom base, a second arc-shaped sliding portion is arranged on the second swing arm, a second arc-shaped sliding fit portion is arranged on the connector, and the second arc-shaped sliding portion slidably fits the second arc-shaped sliding fit portion, so that the second swing arm is rotatably connected to the connector.

In some embodiments of the first aspect, the connectors located on the two sides of the bottom base rotate relative to each other based on the bottom base, to cause the rotating shaft mechanism to switch between the unfolded state and the folded state; and when the rotating shaft mechanism switches from the unfolded state to the folded state, the connector drives the first swing arm and the second swing arm to rotate relative to the bottom base, the first arc-shaped sliding portion and the first arc-shaped sliding fit portion slide relative to each other to cause the connector and the first swing arm to rotate relative to each other, and the second arc-shaped sliding portion and the second arc-shaped sliding fit portion slide relative to each other to cause the connector and the second swing arm to rotate relative to each other, where
when the rotating shaft mechanism switches from the unfolded state to the folded state, a rotation angle of the second swing arm rotating relative to the bottom base is less than 90 degrees.

In some embodiments of the first aspect, one of the second arc-shaped sliding portion and the second arc-shaped sliding fit portion is an arc-shaped sliding rail, and the other is an arc-shaped sliding groove; and the second arc-shaped sliding portion is in surface contact with the second arc-shaped sliding fit portion.

In some embodiments of the first aspect, the rotating shaft mechanism further includes at least two second swing arms, the second swing arms are respectively arranged on the two sides of the bottom base, and the second swing arms are rotatably connected to the bottom base, where the second swing arm and the connector located on the same side of the bottom base are slidably connected.

In some embodiments of the first aspect, a first slidable connection portion is arranged on one of the second swing arm and the connector located on the same side of the bottom base, a first linear sliding groove is provided on the other, and the first slidable connection portion slidably fits the first linear sliding groove.

In some embodiments of the first aspect, a third arc-shaped sliding portion is arranged on the second swing arm, a third arc-shaped sliding fit portion is arranged on the bottom base, and the third arc-shaped sliding portion slidably fits the third arc-shaped sliding fit portion, so that the second swing arm is rotatably connected to the bottom base.

In some embodiments of the first aspect, one of the third arc-shaped sliding portion and the third arc-shaped sliding fit portion is an arc-shaped sliding rail, and the other is an arc-shaped sliding groove; and the third arc-shaped sliding portion is in surface contact with the third arc-shaped sliding fit portion.

In some embodiments of the first aspect, the rotating shaft mechanism further includes a third rotating shaft, and the second swing arm is rotatably connected to the bottom base through the third rotating shaft.

In some embodiments of the first aspect, the first swing arm is a main swing arm.

In some embodiments of the first aspect, the rotating shaft mechanism further includes at least two third swing arms, the third swing arms are respectively arranged on the two sides of the bottom base, and the third swing arms are rotatably connected to the bottom base, where the third swing arm and the connector located on the same side of the bottom base are slidably connected.

In some embodiments of the first aspect, a second slidable connection portion is arranged on one of the third swing arm and the connector located on the same side of the bottom base, a second linear sliding groove is provided on the other, and the second slidable connection portion slidably fits the second linear sliding groove.

In some embodiments of the first aspect, the rotating shaft mechanism further includes a fourth rotating shaft, and the first swing arm is rotatably connected to the bottom base through the fourth rotating shaft.

In some embodiments of the first aspect, the connectors located on the two sides of the bottom base rotate relative to each other based on the bottom base, to cause the rotating shaft mechanism to switch between the unfolded state and the folded state;
an arc-shaped surface is concavely arranged on the first swing arm; and when the rotating shaft mechanism is in the folded state, the arc-shaped surface on the first swing arm located on one side of the bottom base faces the first swing arm located on the other side of the bottom base.

In some embodiments of the first aspect, the rotating shaft mechanism further includes at least two fourth swing arms, and the fourth swing arms are respectively arranged on the two sides of the bottom base; the fourth swing arm is rotatably connected to the connector located on the same side of the bottom base; and a track groove is provided on one of the fourth swing arm and the first swing arm located on the same side of the bottom base, a sliding member is arranged on the other, and the sliding member is in high pair cooperation with the track groove.

In some embodiments of the first aspect, in the fourth swing arm and the connector located on the same side of the bottom base, a fourth arc-shaped sliding portion is arranged on the fourth swing arm, a fourth arc-shaped sliding fit portion is arranged on the connector, and the fourth arc-shaped sliding portion slidably fits the fourth arc-shaped sliding fit portion, so that the fourth swing arm is rotatably connected to the connector.

In some embodiments of the first aspect, the rotating shaft mechanism further includes a support member, and the support member is connected to the fourth swing arm;
the connectors located on the two sides of the bottom base rotate relative to each other based on the bottom base, to cause the rotating shaft mechanism to switch between the unfolded state and the folded state; and when the rotating shaft mechanism is in the folded state, the support member is located between the first swing arms located on the two sides of the bottom base.

In some embodiments of the first aspect, the first swing arm includes:
a first arm portion, rotatably connected to the bottom base; and
at least two second arm portions, connected to the first arm portion and arranged sequentially along a direction of a rotation axis of the first arm portion, where
in the first swing arm and the connector located on the same side of the bottom base, a first arc-shaped sliding portion is arranged on each second arm portion of the first swing arm, a plurality of first arc-shaped sliding fit portions are arranged on the connector, and the first arc-shaped sliding portions slidably fit the first arc-shaped sliding fit portions in a one-to-one correspondence manner; and
in the fourth swing arm and the first swing arm located on the same side of the bottom base, the fourth swing arm is located between two adjacent second arm portions of the first swing arm.

According to a second aspect, an embodiment of this application provides a terminal device, including:
a foldable device, including a first housing, a second housing, and the rotating shaft mechanism according to any one of the embodiments of the first aspect, where the first housing is connected to the connector on one side of the bottom base, and the second housing is connected to the connector on the other side of the bottom base; and
a foldable screen, arranged on the first housing and the second housing, where a position of a foldable portion of the foldable screen corresponds to a position of the rotating shaft mechanism.

It may be understood that, for beneficial effects of the second aspect, reference may be made to the relevant description in the first aspect, and details are not described herein again.

### BRIEF DESCRIPTION OF DRAWINGS

FIG. 1 is a schematic structural diagram of an electronic device in an unfolded state in some cases;
FIG. 2 is a schematic structural diagram of an electronic device in a folded state in some cases;
FIG. 3 is a schematic structural diagram of a foldable mechanism in an unfolded state in some cases;
FIG. 4 is a schematic structural diagram of a foldable mechanism in a folded state in some cases;
FIG. 5 is a schematic structural diagram of a terminal device in an unfolded state according to some embodiments of this application;
FIG. 6 is a schematic structural diagram of the terminal device shown in FIG. 5 in a folded state;
FIG. 7 is a schematic structural diagram of a rotating shaft mechanism in an unfolded state according to some embodiments of this application;
FIG. 8 is a schematic structural diagram of the rotating shaft mechanism shown in FIG. 7 in a folded state;
FIG. 9 is a schematic cross-sectional view of the rotating shaft mechanism shown in FIG. 7 in an unfolded state;
FIG. 10 is a schematic cross-sectional view of fitting between the rotating shaft mechanism shown in FIG. 7 in a folded state and a foldable screen;
FIG. 11 is an exploded view of the rotating shaft mechanism shown in FIG. 7;
FIG. 12 is a schematic structural diagram of a rotating shaft mechanism in an unfolded state according to some other embodiments of this application;
FIG. 13 is a schematic structural diagram of the rotating shaft mechanism shown in FIG. 12 in a folded state;
FIG. 14 is an exploded view of the rotating shaft mechanism shown in FIG. 12;
FIG. 15 is a schematic structural diagram of a rotating shaft mechanism in an unfolded state according to still some other embodiments of this application;
FIG. 16 is a schematic structural diagram of the rotating shaft mechanism shown in FIG. 15 in a folded state;
FIG. 17 is an exploded view of the rotating shaft mechanism shown in FIG. 15;
FIG. 18 is a schematic structural diagram of a rotating shaft mechanism in an unfolded state according to yet some other embodiments of this application;
FIG. 19 is a schematic structural diagram of the rotating shaft mechanism shown in FIG. 18 in a folded state; and
FIG. 20 is an exploded view of the rotating shaft mechanism shown in FIG. 18.

### Reference numerals in the figures:

1. Electronic device; 01. Device body; 02. Flexible display screen; 021. Flexibly deformed portion; 011: foldable mechanism; 0111. Support base; 01111. Side edge; 0112. Secondary swing arm; 01121. Arched portion; 0113. Fixing block; 012. First side plate; 013. Second side plate;
10000. Terminal device; 2000. Foldable screen; 2100. Foldable portion;
1000. Foldable device; 200. First housing; 300. Second housing;
100. Rotating shaft mechanism; 10. Bottom base; 20. Connector; 30. First swing arm; 301. First arc-shaped sliding portion; 201. First arc-shaped sliding fit portion;
41. Synchronization assembly; 411. First gear; 412. Second gear; 413. Third gear; 414. Fourth gear;
42. Damping assembly; 421. First cam structure; 422. First movable member; 423. Second cam structure; 424. Elastic member; 425. Third cam structure; 426. Second movable member; 427. Fourth cam structure;
51. First rotating shaft; 60. Second swing arm; 52. Second rotating shaft; 601. Second arc-shaped sliding portion; 202. Second arc-shaped sliding fit portion; 602. First slidable connection portion; 203. First linear sliding groove; 603. Third arc-shaped sliding portion; 101. Third arc-shaped sliding fit portion; 53. Third rotating shaft; 61. Third swing arm; 604. Second slidable connection portion; 204. Second linear sliding groove; 54. Fourth rotating shaft; 310. Arc-shaped surface;
70. Fourth swing arm; 701. Track groove; 302. Sliding member; 702. Fourth arc-shaped sliding portion; 205. Fourth arc-shaped sliding fit portion; 31. First arm portion; and 32. Second arm portion.

### DESCRIPTION OF EMBODIMENTS

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain this application and cannot be construed as a limitation to this application.

In the description of this application, it should be understood that orientation or position relationships indicated by the terms such as "length", "width", "thickness", "top", "bottom", "inner", "outer", "upper", "lower", "left", and "right" are based on orientation or position relationships shown in the accompanying drawings, and are used only for ease of describing this application and brevity of description, rather than indicating or implying that the mentioned apparatus or element must have a particular orientation or must be constructed and operated in a particular orientation. Therefore, such terms should not be construed as a limitation to this application.

The terms "first", "second", "third", and "fourth" are used merely for distinguishing description, and shall not be construed as indicating or implying relative importance or implicitly indicating a quantity of indicated technical features. For example, a first swing arm and a second swing arm are merely used for distinguishing between different swing arms and do not a sequence of the swing arms. The first swing arm may alternatively be named as the second swing arm, and the second swing arm may alternatively be named as the first swing arm, without departing from the scope of the embodiments described herein. In addition, the terms "first", "second", "third", and "fourth" also do not define that the indicated features are definitely different.

In this application, unless otherwise explicitly specified or defined, the terms "connect" and "connection" should be understood in a broad sense. For example, the connection may be a fixed connection, a detachable connection, or an integral connection. A relationship between two components defined by the terms such as "connect", "connection", or "fix" may be a mechanical connection or an electrical connection; or may be a fixed connection, an indirect connection through an intermediary, or internal communication between two elements or a mutual interaction relationship between two elements. A person of ordinary skill in the art can understand specific meanings of the foregoing terms in this application according to a specific situation.

In this application, "and/or" describes only an association relationship for describing associated objects and indicates that three relationships may exist. For example, A and/or B may represent the following three cases: Only A exists, both A and B exist, and only B exists. In addition, the character "/" in this specification generally indicates an "or" relationship between the associated objects.

It should be noted that, in this application, the terms such as "in some embodiments", "exemplary", or "for example" are used to represent giving an example, an illustration, or a description. Any embodiment or design scheme described as "in some embodiments", "exemplary", or "for example" in this application should not be explained as being more preferable or more advantageous than another embodiment or design scheme. Exactly, use of the terms such as "in some embodiments", "exemplary", or "for example" is intended to present a related concept in a specific manner.

To make the objectives, technical solutions, and advantages of this application clearer and more comprehensible, the following further describes this application in detail with reference to the accompanying drawings and embodiments.

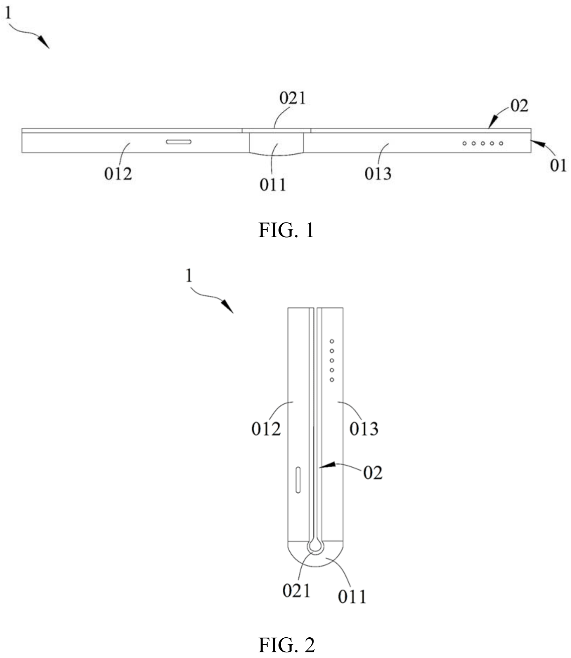

Referring to FIG. 1 and FIG. 2, FIG. 1 shows a front view of a foldable electronic device 1 in an unfolded state in some cases, and FIG. 2 shows a front view of the electronic device 1 shown in FIG. 1 in a folded state.

The electronic device 1 includes a device body 01 and a flexible display screen 02 arranged on the device body 01. The device body 01 includes a foldable mechanism 011, a first side plate 012, and a second side plate 013, where the first side plate 012 and the second side plate 013 are respectively connected to two sides of the foldable mechanism 011 and can rotate between an unfolded state and a folded state based on the foldable mechanism 011. The flexible display screen 02 is arranged on the first side plate 012 and the second side plate 013, and a position of a flexibly deformed portion 021 of the flexible display screen 02 corresponds to a position of the foldable mechanism 011; and the flexibly deformed portion 021 can be bent, so that the flexible display screen 02 can be folded or unfolded along with rotation of the first side plate 012 and the second side plate 013.

Referring to FIG. 1, when the electronic device 1 is in the unfolded state, an angle between the first side plate 012 and the second side plate 013 is about 180 degrees, the flexible display screen 02 is approximately in a shape of a plate, and the flexibly deformed portion 021 of the flexible display screen 02 is approximately flat.

Referring to FIG. 2, when the electronic device 1 is in the folded state, the angle between the first side plate 012 and the second side plate 013 is about 0 degree, the flexibly deformed portion 021 of the flexible display screen 02 is in a bent shape, and the flexible display screen 02 is located between the first side plate 012 and the second side plate 013.

When the electronic device 1 is in the folded state, if the foldable mechanism 011 is set to a small size, especially to a small thickness dimension, the foldable mechanism can hardly provide a sufficient accommodating space for the flexibly deformed portion 021, the foldable mechanism 011 easily interferes with the flexibly deformed portion 021 and applies a force to the flexibly deformed portion 021, which is likely to cause defects such as an arched portion or wrinkles on the flexibly deformed portion 021 and even cause damage to the flexibly deformed portion, affecting an appearance and a service life of the flexible display screen 02 in the folded state, and further affecting a service life and user's use experience of the electronic device 1.

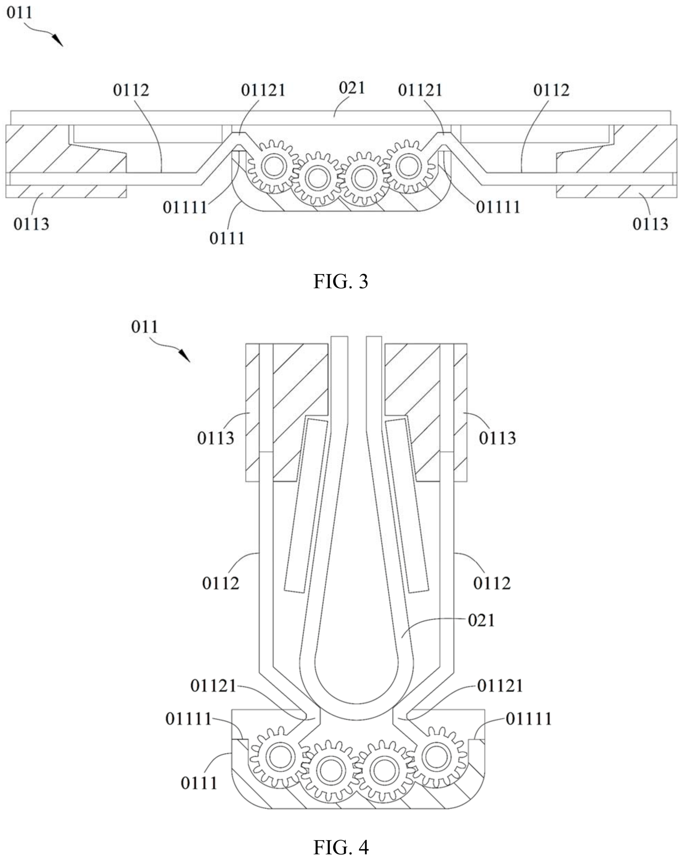

For example, referring to FIG. 3 and FIG. 4, FIG. 3 shows a case that the foldable mechanism 011 fits the flexibly deformed portion 021 of the flexible display screen 02 in the unfolded state, and FIG. 4 shows a case that the foldable mechanism 011 fits the flexibly deformed portion 021 of the flexible display screen 02 in the folded state.

The foldable mechanism 011 includes a support base 0111, two secondary swing arms 0112 respectively arranged on two sides of the support base 0111, and two fixing blocks 0113 respectively arranged on the two sides of the support base 0111. One end of the secondary swing arm 0112 is rotatably connected to the support base 0111 through a rotating shaft, and the other end of the secondary swing arm 0112 slidably fits a linear sliding groove of the fixing block 0113. The two fixing blocks 0113 are respectively configured to be fixedly connected to the first side plate 012 and the second side plate 013. When the electronic device 1 switches between the folded state and the unfolded state, the first side plate 012 and the second side plate 013 respectively drive the two fixing blocks 0113 to rotate relative to the support base 0111, the fixing block 0113 drives the secondary swing arm 0112 on the same side to rotate relative to the support base 0111, and the secondary swing arm 0112 slides in the linear sliding groove. When the electronic device 1 switches from the unfolded state to the folded state or switches from the folded state to the unfolded state, rotation angles of the fixing block 0113 and the secondary swing arm 0112 rotating relative to the support base 0111 are the same and are both fixed 90 degrees.

To enable the secondary swing arm 0112 to avoid a side edge 01111 of the support base 0111 when the electronic device 1 is in the unfolded state, the secondary swing arm 0112 generally includes an arched portion 01121, so that a recessed portion is formed on a back surface of the arched portion 01121, namely, the side edge 01111 of the support base 0111 may be avoided through the recessed portion. However, when the electronic device 1 switches from the unfolded state to the folded state, since the secondary swing arm 0112 needs to rotate by 90 degrees, the arched portion 01121 of the secondary swing arm 0112 easily interferes with the flexibly deformed portion 021 of the flexible display screen 02, which easily affects a shape of the flexible display screen 02 and even causes damage to the flexible display screen 02.

Therefore, the existing foldable mechanism 011 still has a large size, and in a case of meeting normal fitting between the foldable mechanism 011 and components such as the flexible display screen 02 without interference, the size of the foldable mechanism 011 can be hardly further reduced (especially a dimension of the foldable mechanism 011 in the folded state along a width direction, where the width direction is a direction pointing from the secondary swing arm 0112 on one side of the support base 0111 to the secondary swing arm 0112 on the other side). As a result, the electronic device 1 can hardly be further lightened and thinned.

In view of this, the embodiments of this application provide a rotating shaft mechanism, a foldable device including the rotating shaft mechanism, and a terminal device including the foldable device, which can alleviate the technical problem that the size of the foldable mechanism can hardly be further reduced caused by preventing interference between the foldable mechanism and the flexible display screen in the related art.

The terminal device provided in the embodiments of this application belongs to a foldable electronic device, that is, an electronic device that can be folded and unfolded. The terminal device may be, but is not limited to, a mobile phone, a tablet computer, a laptop computer (Laptop), a notebook computer (Notebook PC), a personal digital assistant (Personal Digital Assistant, PDA), a wearable device (such as a watch), an in-vehicle device, an augmented reality (Augmented Reality, AR)/virtual reality (Virtual Reality, VR) device, or the like.

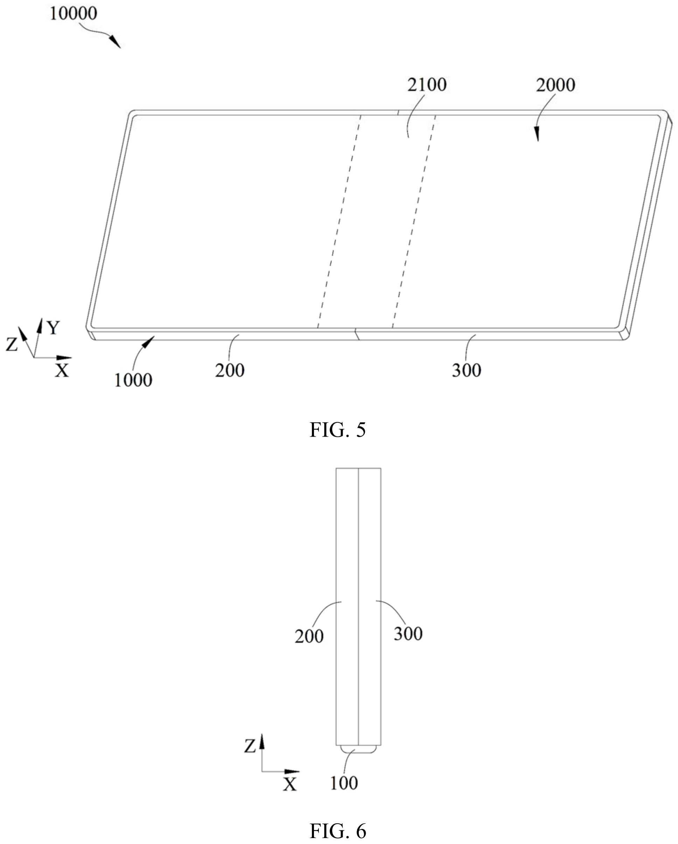

Referring to FIG. 5 and FIG. 6, FIG. 5 shows a three-dimensional schematic structural diagram of a terminal device 10000 in an unfolded state according to some embodiments of this application, and FIG. 6 shows a front view of the terminal device 10000 shown in FIG. 5 in a folded state. For ease of understanding, in the embodiments of this application, description is provided by using an example in which the terminal device 10000 is a mobile phone.

In different use requirements, the terminal device 10000 may be unfolded to an unfolded state, or may be folded to a folded state, or may be in an intermediate state between the unfolded state and the folded state. It should be understood that, the intermediate state may be any state between the unfolded state and the folded state of the terminal device 10000 and is not a unique state.

The terminal device 10000 includes a foldable device 1000 and a foldable screen 2000, and the foldable screen 2000 is arranged on the foldable device 1000. The foldable device 1000 may provide support and protection to the foldable screen 2000, and can be folded or unfolded. The foldable screen 2000 is a flexible screen, to be folded or unfolded along with the foldable device 1000. It may be understood that, the foldable screen 2000 can be configured to display information and provide an interaction interface for a user, and may be a plurality of types of display screens.

The foldable device 1000 includes a rotating shaft mechanism 100, a first housing 200, and a second housing 300. The rotating shaft mechanism 100 is located between the first housing 200 and the second housing 300, and is respectively connected to the first housing 200 and the second housing 300. The first housing 200 and the second housing 300 may rotate relative to each other based on the rotating shaft mechanism 100, to rotate close to each other (that is, rotate toward the same direction) to cause the terminal device 10000 in the folded state, and rotate away from each other (that is, rotate toward opposite directions) to cause the terminal device 10000 in the unfolded state.

It may be understood that, there may be one or a plurality of rotating shaft mechanisms 100. When there are a plurality of rotating shaft mechanisms 100, the rotating shaft mechanisms 100 may be arranged at intervals sequentially and located between the first housing 200 and the second housing 300.

Still referring to FIG. 5 and FIG. 6, the foldable screen 2000 is arranged on the first housing 200 and the second housing 300, and can be folded or unfolded along with rotation of the first housing 200 and the second housing 300. The foldable screen 2000 includes a foldable portion 2100, and a position of the foldable portion 2100 corresponds to a position of the rotating shaft mechanism 100. That is, the foldable portion 2100 is arranged opposite to the rotating shaft mechanism 100. The foldable portion 2100 is flexible, so that when the first housing 200 and the second housing 300 rotate relative to each other, the foldable screen 2000 can be folded through bending of the foldable portion 2100. When the foldable screen 2000 is in the folded state, the foldable portion 2100 may be in a shape of a droplet or U, but is not limited to the shape.

It may be understood that, a portion of the foldable screen 2000 corresponding to the first housing 200 may be flexible or rigid. A portion of the foldable screen 2000 corresponding to the second housing 300 may be flexible or rigid.

A front surface of the foldable screen 2000 is a surface facing away from the rotating shaft mechanism 100, that is, the foldable screen 2000 is a display surface configured to display an image. A back surface of the foldable screen 2000 is a surface facing the rotating shaft mechanism 100, and may also be considered as a non-display surface of the foldable screen 2000.

Referring to FIG. 5, when the terminal device 10000 is in the unfolded state, the foldable device 1000 and the foldable screen 2000 are also in the unfolded state, and a first surface of the first housing 200 configured to mount the foldable screen 2000 and a second surface of the second housing 300 configured to mount the foldable screen 2000 are approximately located on the same plane. That is, an angle between the first surface and the second surface is about 180 degrees. In this case, the foldable screen 2000 is approximately flat, so that the terminal device 10000 has a large display area. It should be understood that, when the foldable device 1000 is in the unfolded state, it is not limited that the angle between the first surface and the second surface is absolute 180 degrees, and the angle between the two surfaces may alternatively be greater than or smaller than 180 degrees but close to 180 degrees. For example, a range of the angle may be from 165 degrees to 190 degrees (for example, 170 degrees, 173 degrees, 175 degrees, 182 degrees, or 185 degrees, but is not limited thereto), and the foldable screen 2000 can also be unfolded.

Referring to FIG. 6, when the terminal device 10000 is in the folded state, the foldable device 1000 and the foldable screen 2000 are also in the folded state, and the first surface of the first housing 200 configured to mount the foldable screen 2000 and the second surface of the second housing 300 configured to mount the foldable screen 2000 are arranged opposite to each other and are approximately parallel to each other. That is, the angle between the first surface and the second surface is about 0 degree. In this case, the foldable screen 2000 is folded relative to the foldable portion 2100 to be in the folded state, which is conducive to accommodation of the terminal device 10000. It should be understood that, when the foldable device 1000 is in the unfolded state, it is not limited that the first surface is absolutely parallel to the second surface, and the angle between the two surfaces may also be greater than 0 degree but close to 0 degree. For example, the range of the angle may be from 0 degree to 15 degrees (for example, 1 degree, 2 degrees, 3 degrees, 5 degrees, or 10 degrees, but is not limited thereto), and the foldable screen 2000 can also be folded.

In some embodiments, referring to FIG. 5 and FIG. 6, the terminal device 10000 may be an inner foldable terminal device, that is, the foldable screen 2000 is an inner foldable foldable screen. After the foldable screen 2000 is folded, the foldable screen 2000 is located between the first housing 200 and the second housing 300.

Certainly, in some other embodiments, the terminal device 10000 may alternatively be an outer foldable terminal device, that is, the foldable screen 2000 is an outer foldable foldable screen. After the foldable screen 2000 is folded, the display surface of the foldable screen 2000 is exposed, and the first housing 200 and the second housing 300 are located between the foldable screen 2000.

In some embodiments, a mounting space may be provided on at least one of the first housing 200 and the second housing 300, to mount electronic components of the terminal device 10000. For example, the electronic components may include but are not limited to a circuit board, a battery, a phone receiver, a speaker, or a camera. The circuit board may integrate electronic components such as a main controller, a storage unit, an antenna module, or a power supply management module of the terminal device 10000, and the battery may supply power to the electronic components such as the foldable screen 2000, the circuit board, the phone receiver, the speaker, or the camera. Shapes and structures of the first housing 200 and the second housing 300 may be the same or different. This is not limited in the embodiments of this application. The first housing 200 and the second housing 300 may be middle frame structures, and specific shapes and structures of the two housings may be set according to a requirement. This is not uniquely limited in the embodiments of this application.

The following describes the rotating shaft mechanism 100 provided in the embodiments of this application.

For ease of description of the embodiments below, an XYZ three-axis rectangular coordinate system, where a width direction of the rotating shaft mechanism 100 is defined as an X-axis direction, and the X-axis direction is parallel to a direction pointing from the first housing 200 to the second housing 300 when the terminal device 10000 is in the unfolded state; a length direction of the rotating shaft mechanism 100 is defined as a Y-axis direction, and the Y-axis direction is parallel to a direction pointing from an end of the first housing 200 to the other opposite end when the terminal device 10000 is in the unfolded state; and a thickness direction of the rotating shaft mechanism 100 is defined as a Z-axis direction, and the Z-axis direction is parallel to a direction pointing from the first housing 200 to the foldable screen 2000 when the terminal device 10000 is in the unfolded state, that is, parallel to a thickness direction of the terminal device 10000. Every two of the X-axis direction, the Y-axis direction, and the Z-axis direction are perpendicular to each other. The X-axis direction includes an X-axis positive direction and an X-axis negative direction, and the Y-axis direction and the Z-axis direction are the same. It should be understood that the coordinate system of the rotating shaft mechanism 100 may be flexibly set according to an actual requirement. This application only provides an example, which cannot be considered as a special limitation to this application.

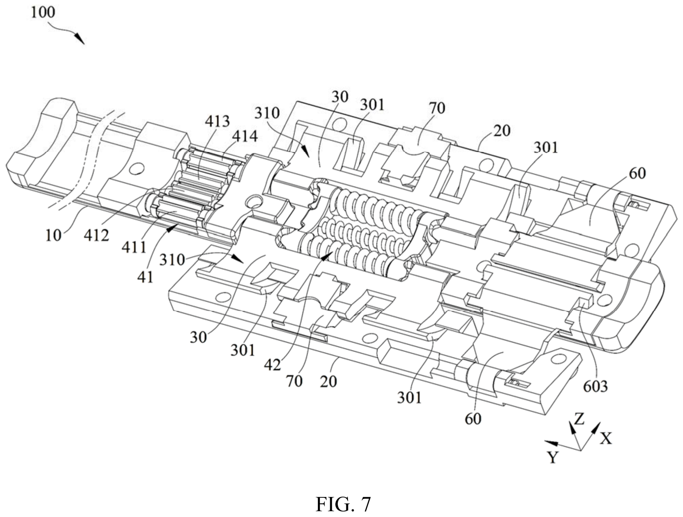

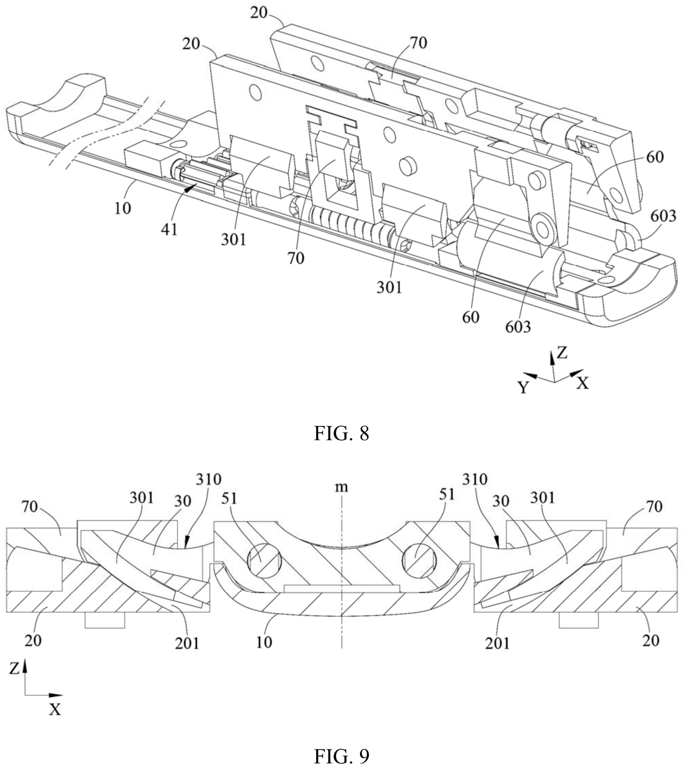

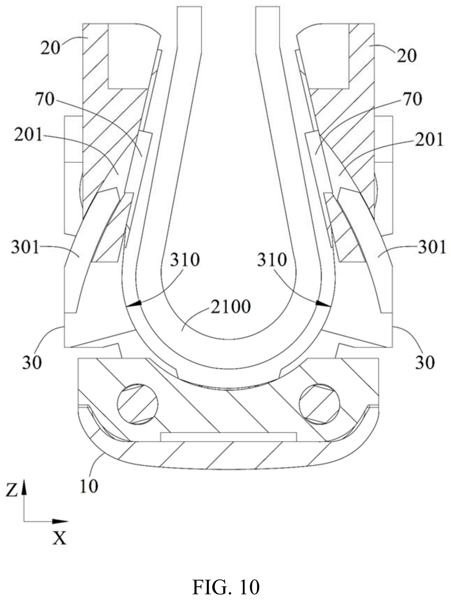

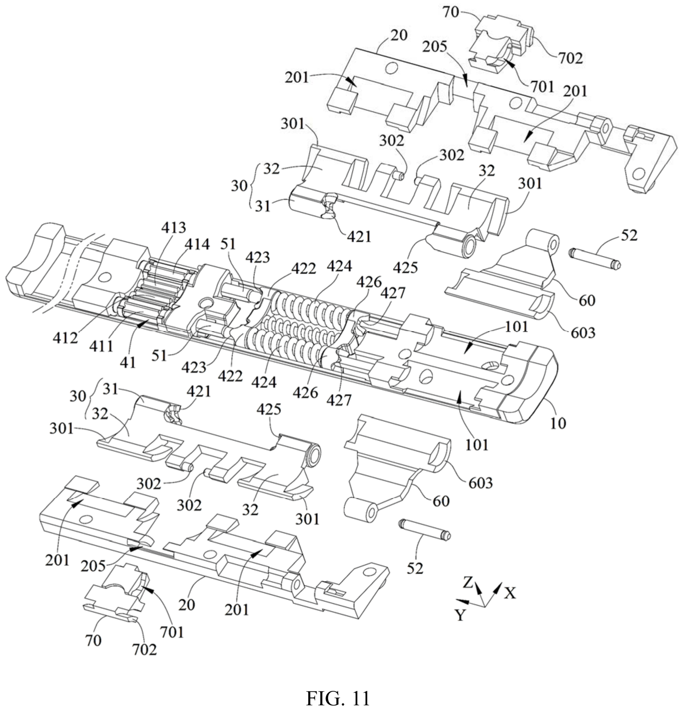

Referring to FIG. 7 to FIG. 11, FIG. 7 shows a three-dimensional schematic structural diagram of a rotating shaft mechanism 100 in an unfolded state according to some embodiments of this application, FIG. 8 shows a three-dimensional schematic structural diagram of the rotating shaft mechanism 100 shown in FIG. 7 in a folded state, FIG. 9 shows a schematic cross-sectional view of the rotating shaft mechanism 100 shown in FIG. 7 in an unfolded state, FIG. 10 shows a schematic cross-sectional view of fitting between the rotating shaft mechanism 100 shown in FIG. 7 in a folded state and the foldable portion 2100 of the foldable screen 2000, and FIG. 11 shows an exploded view of the rotating shaft mechanism 100 shown in FIG. 7.

The rotating shaft mechanism 100 includes a bottom base 10, at least two connectors 20, and at least two first swing arms 30. The connectors 20 are respectively arranged on two sides of the bottom base 10. The first swing arms 30 are respectively arranged on the two sides of the bottom base 10, and the first swing arms 30 are rotatably connected to the bottom base 10. In the first swing arm 30 and the connector 20 located on the same side of the bottom base 10, a first arc-shaped sliding portion 301 is arranged on the first swing arm 30, a first arc-shaped sliding fit portion 201 is arranged on the connector 20, and the first arc-shaped sliding portion 301 slidably fits the first arc-shaped sliding fit portion 201, so that the first swing arm 30 is rotatably connected to the connector 20.

It may be understood that, the bottom base 10 may support and connect the first swing arms 30, and may be structures in various regular or irregular shapes. For example, the bottom base may be, but is not limited to, a blocky structure, a frame structure, a housing structure, or a plate-shaped structure. The bottom base 10 may be a single component, or may be an assembly including a plurality of assembled components. In some cases, the bottom base 10 is also referred to as a main shaft, a main body, or the like.

It may be understood that, that the connectors 20 are respectively arranged on two sides of the bottom base 10 refers to that the connectors 20 are arranged on the two sides of the bottom base 10, but there may be one or more connectors 20 on each side, and quantities of the connectors 20 on the two sides of the bottom base 10 may be the same or different. It should be understood that, the two sides of the bottom base 10 are two sides with a central longitudinal section m of the bottom base 10 as an interface, and the central longitudinal section m is a plane parallel to a length direction (that is, the Y-axis direction) and a thickness direction (that is, the Z-axis direction) of the bottom base 10 and equally dividing the bottom base 10 along a width direction (that is, the X-axis direction) of the bottom base 10. By analogy, two sides of a component mentioned in the following all refer to two sides with a central longitudinal section of the component as an interface. Optionally, the connectors 20 on the two sides of the bottom base 10 may be arranged opposite to each other, that is, approximately located at the same position along the length direction of the bottom base 10, and this case is exemplarily shown in FIG. 7 and FIG. 8. Certainly, in some other embodiments, the connectors 20 on the two sides of the bottom base 10 may alternatively not be arranged opposite to each other, that is, staggered along the length direction of the bottom base 10.

The connector 20 on one side of the bottom base 10 is configured to be fixedly connected to the first housing 200, and the connector 20 on the other side of the bottom base 10 is configured to be fixedly connected to the second housing 300. When the first housing 200 and the second housing 300 rotate relative to each other, the connectors 20 located on the two sides of the bottom base 10 are respectively driven to rotate. Optionally, the connector 20 on one side of the bottom base 10 and the first housing 200 may be separately formed and connected to each other, for example, may be connected to each other through a fastener (for example, a bolt, a screw, a pin, or a rivet). Certainly, in some other embodiments, the connector 20 on one side of the bottom base 10 and the first housing 200 may alternatively be an integral structure that is integrally formed. Similarly, the connector 20 on the other side of the bottom base 10 and the second housing 300 may be separately formed and connected to each other, or may be an integral structure that is integrally formed. The connector 20 may be structural members in various regular or irregular shapes, for example, may be, but is not limited to, a blocky structure, a plate-shaped structure, or a frame structure.

It may be understood that, that the first swing arms 30 are respectively arranged on the two sides of the bottom base 10 refers to that the first swing arms 30 are arranged on the two sides of the bottom base 10, but there may be one or more first swing arms 30 on each side, and quantities of the first swing arms 30 on the two sides of the bottom base 10 may be the same or different. The first swing arm 30 may be connected to the bottom base 10 in various rotatable connection manners, so that the first swing arm 30 can rotate relative to the bottom base 10 while being connected to the bottom base 10. Rotation axes of the first swing arms 30 rotating relative to the bottom base 10 may be set to be approximately parallel to each other. Certainly, a specific deviation may also exist between the axes but the axes are nearly parallel to each other, that is, existence of a manufacturing error, an assembly error, or the like may be allowed. The rotation axis of the first swing arm 30 rotating relative to the bottom base 10 may be approximately parallel to the length direction of the bottom base 10.

The first swing arm 30 may be swing arm structures in various shapes, and may be set according to an actual requirement. This is not limited in the embodiments of this application. The first swing arms 30 on the two sides of the bottom base 10 are mainly configured to rotate relative to the bottom base 10, and are both referred to as the first swing arm for ease of description. However, shapes and structures of the first swing arms 30 on the two sides of the bottom base 10 may be the same or different.

The first swing arm 30 and the connector 20 located on the same side of the bottom base 10 are rotatably connected to each other through slidable fitting between the first arc-shaped sliding portion 301 and the first arc-shaped sliding fit portion 201, so that the first arc-shaped sliding portion 301 and the first arc-shaped sliding fit portion 201 slide relative to each other along an arc-shaped track to implement relative rotation. Both the first arc-shaped sliding portion 301 and the first arc-shaped sliding fit portion 201 are arc-shaped structures, and may be arc-shaped structures in various forms, provided that the first arc-shaped sliding portion and the first arc-shaped sliding fit portion can slide relative to each other along the arc-shaped track to be in contact with and fit each other. The first arc-shaped sliding portion 301 and the first swing arm 30 may be an integral structure that is integrally formed, or may be separately formed and fixedly connected to each other. Similarly, the first arc-shaped sliding fit portion 201 and the connector 20 may be an integral structure that is integrally formed, or may be separately formed and fixedly connected to each other.

The connectors 20 located on the two sides of the bottom base 10 can rotate relative to each other based on the bottom base 10, to cause the rotating shaft mechanism 100 to switch between the unfolded state and the folded state. When the rotating shaft mechanism 100 is used in the terminal device 10000, along with switching of the terminal device 10000 between the unfolded state and the folded state, the rotating shaft mechanism 100 accordingly switches between the unfolded state and the folded state synchronously.

Referring to FIG. 9 and FIG. 10 sequentially, when the rotating shaft mechanism 100 switches from the unfolded state to the folded state, the connectors 20 located on the two sides of the bottom base 10 rotate close to each other, the connectors 20 drive the first swing arms 30 to rotate relative to the bottom base 10, and the first swing arms 30 located on the two sides of the bottom base 10 also rotate close to each other. At the same time, the first arc-shaped sliding portion 301 and the first arc-shaped sliding fit portion 201 slide relative to each other, to cause the connector 20 and the first swing arm 30 to rotate relative to each other. The connector 20 approximately faces away from the bottom base 10 and moves away from the first swing arm 30, which may be considered as that a length of an assembly formed by the connector 20 and the first swing arm 30 is increased.

Referring to FIG. 10 and FIG. 9 sequentially, when the rotating shaft mechanism 100 switches from the folded state to the unfolded state, the connectors 20 located on the two sides of the bottom base 10 rotate away from each other, the connectors 20 drive the first swing arms 30 to rotate relative to the bottom base 10, and the first swing arms 30 located on the two sides of the bottom base 10 also rotate away from each other. At the same time, the first arc-shaped sliding portion 301 and the first arc-shaped sliding fit portion 201 slide relative to each other, to cause the connector 20 and the first swing arm 30 to rotate relative to each other. The connector 20 approximately faces the bottom base 10 and moves close to the first swing arm 30, which may be considered as that the length of the assembly formed by the connector 20 and the first swing arm 30 is decreased.

When the terminal device 10000 is an inner foldable terminal device, in a case that the rotating shaft mechanism 100 is in the folded state, an accommodating space configured to accommodate the foldable portion 2100 of the foldable screen 2000 may be formed between the first swing arms 30 located on the two sides of the bottom base 10. When the rotating shaft mechanism 100 switches from the unfolded state to the folded state, the connector 20 and the first swing arm 30 rotate relative to each other through relative sliding between the first arc-shaped sliding portion 301 and the first arc-shaped sliding fit portion 201, so that a rotation angle of the first swing arm 30 relative to the bottom base 10 may be smaller than a rotation angle of the connector 20 relative to the bottom base 10. Compared with fixed rotation angles of 90 degrees of the first swing arm 30 and the connector 20, this helps enlarge the accommodating space formed between the first swing arms 30 located on the two sides of the bottom base 10, and may reduce a possibility of interference between the first swing arm 30 and the foldable portion 2100.

It may be understood that, by changing positions of circle centers of the first arc-shaped sliding portion 301 and the first arc-shaped sliding fit portion 201, the rotation angle of the first swing arm 30 relative to the bottom base 10 in a process that the rotating shaft mechanism 100 rotates from the unfolded state to the folded state may be changed, so that the rotation angle of the first swing arm 30 may be designed according to an actual requirement. This is not uniquely limited in the embodiments of this application.

It may be learned from the foregoing description that, in the rotating shaft mechanism 100 provided in the embodiments of this application, the first swing arm 30 is rotatably connected to the connector 20 through slidable fitting between the first arc-shaped sliding portion 301 and the first arc-shaped sliding fit portion 201, which may be considered as that the first swing arm 30 is rotatably connected to the connector 20 through a virtual shaft; and when the rotating shaft mechanism 100 switches between the unfolded state and the folded state, the rotation angle of the first swing arm 30 relative to the bottom base 10 and the rotation angle of the connector 20 relative to the bottom base 10 may be different. Therefore, when the rotating shaft mechanism 100 is used in the terminal device 10000, in a process that the terminal device 10000 switches from the unfolded state to the folded state, the rotation angle of the first swing arm 30 relative to the bottom base 10 may be designed according to a requirement and does not need to be the same as the rotation angle of the connector 20 relative to the bottom base 10, so that a possibility of interference between the first swing arm 30 and the foldable screen 2000 of the terminal device 10000 when the terminal device 10000 is in the folded state may be reduced. This provides a space for further reduction of a size of the rotating shaft mechanism 100, and for example, helps reduce a dimension of the rotating shaft mechanism 100 in the folded state along the width direction, which is conducive to further miniaturization of the size of the rotating shaft mechanism 100 and a lightening and thinning design of the terminal device 10000.

In some embodiments, referring to FIG. 9 and FIG. 10, when the rotating shaft mechanism 100 switches from the unfolded state to the folded state, the rotation angle of the first swing arm 30 rotating relative to the bottom base 10 is smaller than 90 degrees. That is, the rotation angle of the first swing arm 30 relative to the bottom base 10 in a process of rotating from the unfolded state to the folded state is less than 90 degrees, for example, may be, but is not limited to, 50 degrees, 60 degrees, 65 degrees, 70 degrees, 73 degrees, 80 degrees, or 85 degrees.

Similarly, when the rotating shaft mechanism 100 switches from the folded state to the unfolded state, the rotation angle of the first swing arm 30 rotating relative to the bottom base 10 is also smaller than 90 degrees.

With such a setting, compared with that the rotation angle of the first swing arm 30 relative to the bottom base 10 in the process of rotating from the unfolded state to the folded state is greater than or equal to 90 degrees, a possibility of interference between the first swing arm 30 in the folded state and the foldable portion 2100 of the foldable screen 2000 may be reduced, so that a space is provided for further reduction of the size of the rotating shaft mechanism 100, which is conducive to further miniaturization of the size of the rotating shaft mechanism 100 and a lightening and thinning design of the terminal device 10000.

In some embodiments, referring to FIG. 9 to FIG. 11, one of the first arc-shaped sliding portion 301 and the first arc-shaped sliding fit portion 201 is an arc-shaped sliding rail, and the other is an arc-shaped sliding groove. FIG. 9 to FIG. 11 exemplarily show a case that the first arc-shaped sliding portion 301 is an arc-shaped sliding rail and the first arc-shaped sliding fit portion 201 is an arc-shaped sliding groove. Certainly, the first arc-shaped sliding portion and the first arc-shaped sliding fit portion may alternatively be exchanged, that is, the first arc-shaped sliding portion 301 is an arc-shaped sliding groove, and the first arc-shaped sliding fit portion 201 is an arc-shaped sliding rail. The first arc-shaped sliding portion 301 is in surface contact with the first arc-shaped sliding fit portion 201. That is, the arc-shaped sliding rail may slide in the arc-shaped sliding groove along a groove wall of the arc-shaped sliding groove and be in surface contact with the groove wall of the arc-shaped sliding groove.

It may be understood that, the arc-shaped sliding rail may be arc-shaped sliding rails in a plurality of structural forms, and for example, may be, but is not limited to, a plate-shaped arc-shaped sliding rail (this is case is exemplarily shown in FIG. 7 to FIG. 11), or may be a convex strip-shaped arc-shaped sliding rail, provided that the arc-shaped sliding rail can slidably fits the arc-shaped sliding groove along an arc-shaped track.

With such a setting, the arc-shaped sliding rail and the arc-shaped sliding groove slidably fit each other and are in surface contact, and compared with point contact and line contact, this helps improve the stability and reliability of relative sliding between the first arc-shaped sliding portion 301 and the first arc-shaped sliding fit portion 201, and further improves the stability of rotatable fitting between the first swing arm 30 and the connector 20.

Optionally, referring to FIG. 7, FIG. 8, and FIG. 11, the first arc-shaped sliding fit portion 201 is an arc-shaped sliding groove, and the arc-shaped sliding groove may run through an upper surface of the connector 20 to form an opening, so as to avoid the first swing arm 30 through the opening, which helps reduce a thickness dimension of a whole formed by stacking the first swing arm 30 and the connector 20. The upper surface of the connector 20 is a surface of a side of the connector 20 facing the foldable screen 2000. Certainly, in some other embodiments, the arc-shaped sliding groove may alternatively not run through the upper surface of the connector 20.

It should be noted that, fitting between the first arc-shaped sliding portion 301 and the first arc-shaped sliding fit portion 201 is not limited to fitting between the arc-shaped sliding rail and the arc-shaped sliding groove. The following exemplarily describes some other solutions.

Optionally, in some other embodiments, both the first arc-shaped sliding portion 301 and the first arc-shaped sliding fit portion 201 may be arc-shaped sliding plates or arc-shaped sliding rails, and outer walls thereof include arc-shaped walls. When the arc-shaped wall of the first arc-shaped sliding portion 301 slidably fits and is in surface contact with the arc-shaped wall of the first arc-shaped sliding fit portion 201, the first arc-shaped sliding portion and the first arc-shaped sliding fit portion may also slide along the arc-shaped track, so that the first swing arm 30 is rotatably connected to the connector 20.

To improve the stability of slidable fitting between the first arc-shaped sliding portion 301 and the first arc-shaped sliding fit portion 201, optionally, a limiting member (which may be a rod-shaped structure, a blocky structure, or a plate-shaped structure, but is not limited thereto) may be arranged on one of the first arc-shaped sliding portion 301 and the first arc-shaped sliding fit portion 201, and a limiting sliding groove is provided on the other. The limiting member may run through the limiting sliding groove, and when the first arc-shaped sliding portion 301 and the first arc-shaped sliding fit portion 201 slide relative to each other, the limiting member slides in the limiting sliding groove, to prevent separation from occurring between the first arc-shaped sliding portion 301 and the first arc-shaped sliding fit portion 201.

Optionally, in some other embodiments, one of the first arc-shaped sliding portion 301 and the first arc-shaped sliding fit portion 201 may be an arc-shaped sliding groove, and the other may include a plurality of sliding sub-portions (the sliding sub-portion may be a rod-shaped structure or a blocky structure, but is not limited thereto). The sliding sub-portions are slidably arranged in the arc-shaped sliding groove, and the sliding sub-portions may be in point contact, line contact, or surface contact with the groove wall of the arc-shaped sliding groove. In this way, the first arc-shaped sliding portion 301 and the first arc-shaped sliding fit portion 201 can also slide relative to each other along the arc-shaped track.

The first swing arm 30 may be a plurality of types of swing arms, for example, may be a synchronization swing arm or a main swing arm. The following exemplarily describes a case that the first swing arm 30 is a synchronization swing arm.

In some embodiments, referring to FIG. 7 to FIG. 11, the first swing arm 30 is a synchronization swing arm, and in some cases, the synchronization swing arm is also referred to as a secondary swing arm. The synchronization swing arm is a swing arm rotating synchronously, that is, the first swing arms 30 located on the two sides of the bottom base 10 rotate synchronously (synchronous rotation may be implemented through various synchronous connection manners).

In the related art, the synchronization swing arm generally needs to rotate by a fixed 90 degrees to rotate from an unfolded state to a folded state. As a result, the synchronization swing arm easily interferes with the foldable screen 2000 in the folded state. In the embodiments of this application, the first swing arm 30 is rotatably connected to the connector 20 through slidable fitting between the first arc-shaped sliding portion 301 and the first arc-shaped sliding fit portion 201, so that a rotation angle of the first swing arm 30 in the form of the synchronization swing arm in a process of rotating from the unfolded state to the folded state may be smaller than 90 degrees. That is, a possibility of interference between the synchronization swing arm in the folded state and the foldable screen 2000 may be reduced, a bottleneck that the whole size of the rotating shaft mechanism can be hardly further reduced since the synchronization swing arm needs to rotate by 90 degrees in the process of rotating from the unfolded state to the folded state and easily interferes with the foldable screen in existing solutions in the industry may be overcome, which is conducive to further miniaturization of the rotating shaft mechanism 100 and a lightening and thinning design of the terminal device 10000.

Optionally, in some embodiments, referring to FIG. 7, FIG. 8, and FIG. 11, the rotating shaft mechanism 100 further includes a synchronization assembly 41, and the first swing arms 30 located on the two sides of the bottom base 10 are connected through the synchronization assembly 41.

With such a setting, the first swing arms 30 located on the two sides of the bottom base 10 may be linked through the synchronization assembly 41 to implement synchronous rotation, that is, may rotate close to each other synchronously to the folded state or rotate away from each other synchronously to the unfolded state.

It may be understood that, the synchronization assembly 41 may be various assemblies configured to cause two components to rotate synchronously, for example, may be, but is not limited to, various types of gear assemblies, worm gear and worm transmission assemblies, or friction wheel transmission assemblies.

In a possible implementation, referring to FIG. 7 and FIG. 11, the synchronization assembly 41 may include a first gear 411, a second gear 412, a third gear 413, and a fourth gear 414 that are sequentially engaged and connected, where the first gear 411 is connected to the first swing arm 30 located on one side of the bottom base 10, and the fourth gear 414 is connected to the first swing arm 30 located on the other side of the bottom base 10. Therefore, when the first swing arm 30 located on one side of the bottom base 10 rotates relative to the bottom base 10, the first gear 411 may be driven to rotate synchronously, the first gear 411 may be in engagement transmission with the fourth gear 414 through the second gear 412 and the third gear 413, the fourth gear 414 may drive the first swing arm 30 located on the other side of the bottom base 10 to rotate, and rotation directions of the first swing arms 30 located on the two sides of the bottom base 10 are opposite. The first gear 411 may be directly connected (may be integrally formed, or may be separately formed and fixedly connected) to or indirectly connected through a rotating shaft to the first swing arm 30 located on one side of the bottom base 10. Similarly, the fourth gear 414 may be directly connected (may be integrally formed, or may be separately formed and fixedly connected) to or indirectly connected through a rotating shaft to the first swing arm 30 located on the other side of the bottom base 10.

For example, referring to FIG. 7 and FIG. 11, the first gear 411, the second gear 412, the third gear 413, and the fourth gear 414 may all be spur gears, and rotation axes of the first gear 411, the second gear 412, the third gear 413, and the fourth gear 414 are approximately parallel to each other.

For example, alternatively, the rotation axis of the first gear 411 is perpendicular to the rotation axis of the second gear 412, the rotation axis of the third gear 413 is perpendicular to the rotation axis of the fourth gear 414, and the rotation axis of the first gear 411 is parallel to the rotation axis of the fourth gear 414. The first gear 411, the second gear 412, the third gear 413, and the fourth gear 414 may all be helical gears, to implement engagement transmission from the first gear 411 to the fourth gear 414; or one of the first gear 411 and the second gear 412 may be a spur gear and the other is a face gear, and one of the third gear 413 and the fourth gear 414 is a spur gear and the other is a face gear, to implement engagement transmission from the first gear 411 to the fourth gear 414.

It should be noted that, the synchronization assembly 41 is not limited to including the four gears: the first gear 411, the second gear 412, the third gear 413, and the fourth gear 414; and may alternatively include two engaged gears, where one of the two gears is connected to the first swing arm 30 located on one side of the bottom base 10, and the other is connected to the first swing arm 30 located on the other side of the bottom base 10, to cause the first swing arms 30 located on the two sides of the bottom base 10 to rotate synchronously in opposite rotation directions. Certainly, the synchronization assembly 41 may alternatively include an even quantity of gears such as six, eight, or ten gears.

In another possible implementation, the synchronization assembly 41 may include a worm gear and two worms, where the worms are engaged with the worm gear, and the worm gear is located between the two worms. The two worms are respectively connected to the first swing arms 30 on the two sides of the bottom base 10, rotation axes of the two worms are parallel to each other, and the rotation axis of the worm overlaps with or is parallel to a rotation axis of the connected first swing arm 30. When the first swing arm 30 located on one side of the bottom base 10 rotates relative to the bottom base 10, the first swing arm 30 drives the connected worm to rotate simultaneously, the worm drives another worm through the worm gear, to further drive the first swing arm 30 located on the other side of the bottom base 10 to rotate, and the rotation directions of the first swing arms 30 located on the two sides of the bottom base 10 are opposite.

Optionally, in some embodiments, referring to FIG. 7, FIG. 8, and FIG. 11, the rotating shaft mechanism 100 further includes a damping assembly 42, and the damping assembly 42 is connected to the first swing arm 30 and configured to provide a damping force for the first swing arm 30.

With such a setting, specific damping exists when the first swing arms 30 located on the two sides of the bottom base 10 rotate relative to each other, this helps the first swing arms 30 to remain or stay at an angle after rotating by a preset angle relative to the bottom base 10, so that a specific buffer effect is provided in the process that the rotating shaft mechanism 100 rotates between the unfolded state and the folded state, further helping improve the stability and user's operation feeling of the terminal device 10000 in different folding modes.

It may be understood that, the damping assembly 42 may be various types of damping assemblies that can provide a damping force, for example, may be, but is not limited to, a damping assembly including a cam structure and an elastic member that are assembled.

In a possible implementation, referring to FIG. 7 and FIG. 11, the damping assembly 42 includes a first cam structure 421 arranged on the first swing arm 30, a first movable member 422 located on a side of the first cam structure 421, a second cam structure 423 arranged on the first movable member 422, and an elastic member 424 connected to the first movable member 422. The elastic member 424 is configured to provide a force causing the first movable member 422 to move toward the first cam structure 421, so that the second cam structure 423 and the first cam structure 421 squeeze each other and are in contact with and fit each other. The elastic member 424 may be various types of structural members that can generate elastic deformation, for example, may be, but is not limited to, a spring, a reed, or a torsion spring. When the first swing arm 30 rotates, the first cam structure 421 is driven to rotate simultaneously, and the first cam structure 421 slides relative to the second cam structure 423 to generate a friction force, to further provide a damping force for rotation of the first swing arm 30.

For example, referring to FIG. 7 and FIG. 11, the first cam structure 421 may include a plurality of first convex portions and a plurality of first concave portions that are arranged circumferentially and alternately around the rotation axis of the first swing arm 30, and the second cam structure 423 may include a plurality of second convex portions and a plurality of second concave portions that are arranged circumferentially and alternately around the rotation axis of the first swing arm 30, where the first convex portion may be in contact with and fit an inner wall of the second convex portion or the second concave portion, and the first concave portion may be in contact with and fit the inner wall of the second convex portion. When the first convex portion is in contact with and fits the second concave portion and the first concave portion is in contact with and fits the second convex portion, the first swing arm 30 and the first movable member 422 may be limited relative to each other, which is similar to engagement between gears, helping the first swing arm 30 remain or stay at a corresponding position. In a process that the first swing arm 30 continues to rotate to cause the first convex portion to be gradually separated from the second concave portion and gradually move to be in contact with and fit the second convex portion, the first movable member 422 moves away from the first cam structure 421 and applies a force to the elastic member 424, and the elastic member 424 also applies a reaction force correspondingly, to provide a damping force for rotation of the first swing arm 30.

Optionally, referring to FIG. 11, the damping assembly 42 may further include a third cam structure 425 arranged on the first swing arm 30, a second movable member 426 located on a side of the third cam structure 425, and a fourth cam structure 427 arranged on the second movable member 426. The third cam structure 425 and the first cam structure 421 are opposite to each other and spaced apart, and the first movable member 422, the second movable member 426, and the elastic member 424 are all located between the third cam structure 425 and the first cam structure 421. The elastic member 424 is located between the first movable member 422 and the second movable member 426, and is connected to the first movable member 422 and the second movable member 426 respectively. The elastic member 424 is further configured to provide a force causing the second movable member 426 to move toward the third cam structure 425, so that the fourth cam structure 427 and the third cam structure 425 squeeze each other and are in contact with and fit each other. When the first swing arm 30 rotates, the first cam structure 421 and the third cam structure 425 are driven to rotate simultaneously, the first cam structure 421 slides relative to the second cam structure 423 to generate a friction force, and the third cam structure 425 slides relative to the fourth cam structure 427 to generate a friction force, to further provide a damping force for rotation of the first swing arm 30.

A structure of the third cam structure 425 may be the same as a structure of the first cam structure 421, and a structure of the fourth cam structure 427 may be the same as a structure of the second cam structure 423. Details are not described herein.

It may be understood that, there may be at least two first cam structures 421, at least two first movable members 422, at least two second cam structures 423, at least two elastic members 424, at least two third cam structures 425, at least two second movable members 426, and at least two fourth cam structures 427, and each first cam structure 421, each first movable member 422, each second cam structure 423, each elastic member 424, each third cam structure 425, each second movable member 426, and each fourth cam structure 427 may form a damping group, to form at least two damping groups, so that the damping groups are respectively connected to and fit the first swing arms 30 located on the two sides of the bottom base 10, and the damping groups and the first swing arms 30 may be arranged in a one-to-one correspondence manner. The first movable members 422 located on the two sides of the bottom base 10 may be fixedly connected to move simultaneously. Similarly, the second movable members 426 located on the two sides of the bottom base 10 may be fixedly connected to move simultaneously.

In another possible implementation, the damping assembly 42 may include a cam member, a sliding member, and an elastic member. The cam member may be fixed to the bottom base 10, and the cam member includes a cam surface. The sliding member is slidably arranged on the first swing arm 30 or the connector 20 to slide toward or away from the bottom base 10. One side of the sliding member abuts against the cam surface of the cam member, and the other side of the sliding member is connected to the first swing arm 30 or the connector 20 through the elastic member. The elastic member may be configured to provide an elastic force causing the sliding member to move toward the bottom base 10, to help the sliding member always abut against the cam surface of the cam member. A telescoping direction of the elastic member during elastic deformation is approximately the same as a sliding direction of the sliding member, that is, approximately perpendicular to the rotation axis of the first swing arm 30. An abutting force of elastic abutting between the sliding member and the cam member may be converted into a damping force of the damping assembly 42 to be outputted to the outside, to provide a damping force for rotation of the first swing arm 30.

Optionally, in some embodiments, referring to FIG. 7, FIG. 9, and FIG. 11, the rotating shaft mechanism 100 further includes a first rotating shaft 51, and the first swing arm 30 is rotatably connected to the bottom base 10 through the first rotating shaft 51.

It may be understood that, the first rotating shaft 51 may be a rotating shaft separately formed and arranged with the first swing arm 30 and the bottom base 10, a rotating shaft hole may be provided on the first swing arm 30 and the bottom base 10 respectively, and the first rotating shaft 51 may run through the rotating shaft holes on the first swing arm 30 and the bottom base 10, to implement a rotatable connection between the first swing arm 30 and the bottom base 10. This case is exemplarily shown in FIG. 7 and FIG. 11.

Certainly, the first rotating shaft 51 may alternatively be an integral structure that is integrally formed with the first swing arm 30, a rotating shaft hole is provided on the bottom base 10, and the first rotating shaft 51 rotatably fits the rotating shaft hole on the bottom base 10. Similarly, the first rotating shaft 51 may alternatively be an integral structure that is integrally formed with the bottom base 10, a rotating shaft hole is provided on the first swing arm 30, and the first rotating shaft 51 rotatably fits the rotating shaft hole on the first swing arm 30.

With such a setting, the first swing arm 30 and the bottom base 10 are rotatably connected through a physical shaft, and compared with being connected through a virtual shaft, the connection stability may be improved, and the reliability of switching of the rotating shaft mechanism 100 between the unfolded state and the folded state may be further improved.

Optionally, referring to FIG. 7, FIG. 9, and FIG. 11, the first swing arms 30 located on the two sides of the bottom base 10 may be rotatably connected to the bottom base 10 through one first rotating shaft 51 respectively. When the synchronization assembly 41 includes the first gear 411, the second gear 412, the third gear 413, and the fourth gear 414 that are sequentially engaged and connected, the first gear 411 and the fourth gear 414 may be fixedly connected to the first rotating shafts 51 located on the two sides of the bottom base 10 respectively, to rotate synchronously along with the corresponding first rotating shafts 51. In this case, the first swing arm 30 is also fixedly connected to the first rotating shaft 51 to rotate synchronously. The second gear 412 and the third gear 413 may be rotatably arranged on the bottom base 10 through other rotating shafts respectively. This is conducive to improving the compactness among the first swing arm 30, the first rotating shaft 51, and the synchronization assembly 41.

Referring to FIG. 11, when the damping assembly 42 includes the first movable member 422, the elastic member 424, and the second movable member 426, in the damping group and the first rotating shaft 51 located on the same side of the bottom base 10, the first movable member 422 and the second movable member 426 of the damping group may be sleeved on the first rotating shaft 51, to move along a direction in which an axis of the first rotating shaft 51 is located, and the elastic member 424 of the damping group may be a spring and sleeved on the first rotating shaft 51, to stretch along the direction in which the axis of the first rotating shaft 51. This is conducive to improving the compactness among the first swing arm 30, the first rotating shaft 51, and the damping assembly 42.

Optionally, in some embodiments, referring to FIG. 7, FIG. 8, and FIG. 11, the rotating shaft mechanism 100 further includes at least two second swing arms 60, the second swing arms 60 are respectively arranged on the two sides of the bottom base 10, and the second swing arms 60 are rotatably connected to the bottom base 10, where the second swing arm 60 and the connector 20 located on the same side of the bottom base 10 are rotatably connected.

It may be understood that, that the second swing arms 60 are respectively arranged on the two sides of the bottom base 10 refers to that the second swing arms 60 are arranged on the two sides of the bottom base 10, but there may be one or more second swing arms 60 on each side, and quantities of the second swing arms 60 on the two sides of the bottom base 10 may be the same or different.

The second swing arm 60 may be connected to the bottom base 10 in various rotatable connection manners, so that the second swing arm 60 can rotate relative to the bottom base 10 while being connected to the bottom base 10. Rotation axes of the second swing arms 60 rotating relative to the bottom base 10 may be set to be approximately parallel to each other. Certainly, a specific deviation may also exist between the axes but the axes are nearly parallel to each other, that is, existence of a manufacturing error, an assembly error, or the like may be allowed. The rotation axis of the second swing arm 60 rotating relative to the bottom base 10 may be approximately parallel to the length direction of the bottom base 10. The second swing arm 60 may be rotatably connected to the connector 20 located on the same side of the bottom base 10 in various rotatable connection manners.

The second swing arm 60 may be swing arm structures in various shapes, and may be set according to an actual requirement. This is not limited in the embodiments of this application. The second swing arms 60 on the two sides of the bottom base 10 are mainly configured to rotate relative to the bottom base 10, and are both referred to as the second swing arm for ease of description. However, shapes and structures of the second swing arms 60 on the two sides of the bottom base 10 may be the same or different.

With such a setting, the second swing arm 60 may be considered as a main swing arm, and the connector 20 is rotatably connected to the bottom base 10 through the first swing arm 30 and the second swing arm 60, which may be considered as forming a hinge four-rod mechanism, helping improve the stability of switching of the rotating shaft mechanism 100 between the unfolded state and the folded state.

There are a plurality of feasible implementations for a rotatable connection manner between the second swing arm 60 and the connector 20, which are exemplarily described below.

In a possible implementation, referring to FIG. 7 and FIG. 11, the rotating shaft mechanism 100 further includes a second rotating shaft 52, and the second swing arm 60 and the connector 20 located on the same side of the bottom base 10 are rotatably connected through the second rotating shaft 52.

It may be understood that, the second rotating shaft 52 may be a rotating shaft separately formed and arranged with the second swing arm 60 and the connector 20, a rotating shaft hole may be provided on the second swing arm 60 and the connector 20 respectively, and the second rotating shaft 52 may run through the rotating shaft hole on the second swing arm 60 and the rotating shaft hole on the connector 20, to implement a rotatable connection between the second swing arm 60 and the connector 20. This case is exemplarily shown in FIG. 7 and FIG. 11.

Certainly, the second rotating shaft 52 may alternatively be an integral structure that is integrally formed with the second swing arm 60, a rotating shaft hole is provided on the connector 20, and the second rotating shaft 52 rotatably fits the rotating shaft hole on the connector 20. Similarly, the second rotating shaft 52 may alternatively be an integral structure that is integrally formed with the connector 20, a rotating shaft hole is provided on the second swing arm 60, and the second rotating shaft 52 rotatably fits the rotating shaft hole on the second swing arm 60.

With such a setting, the second swing arm 60 and the connector 20 are rotatably connected through a physical shaft, and compared with being connected through a virtual shaft, the connection stability may be improved, and the reliability of switching of the rotating shaft mechanism 100 between the unfolded state and the folded state may be further improved.

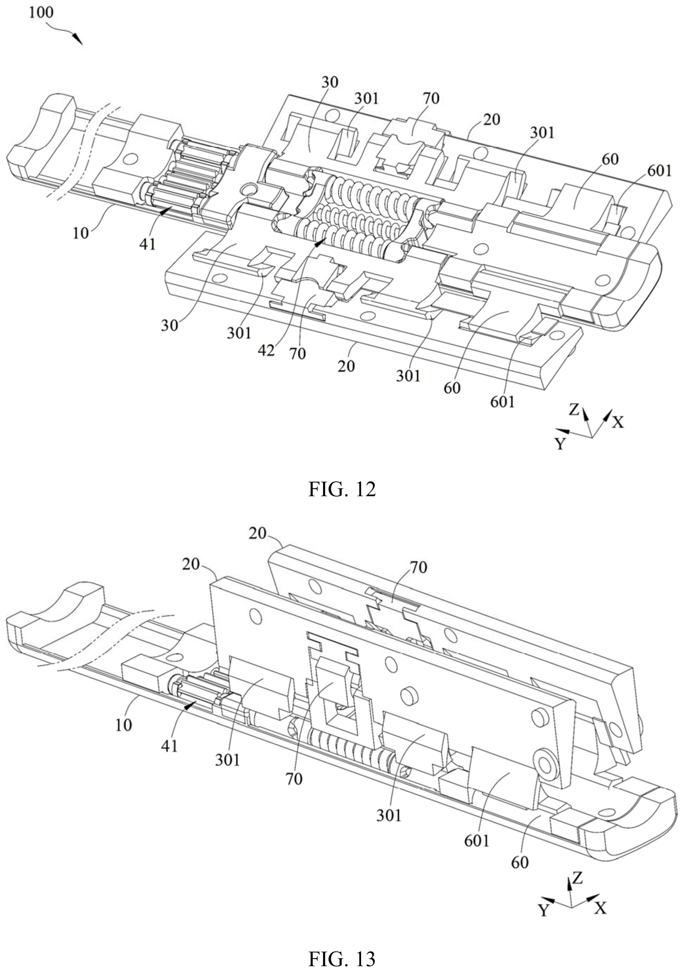

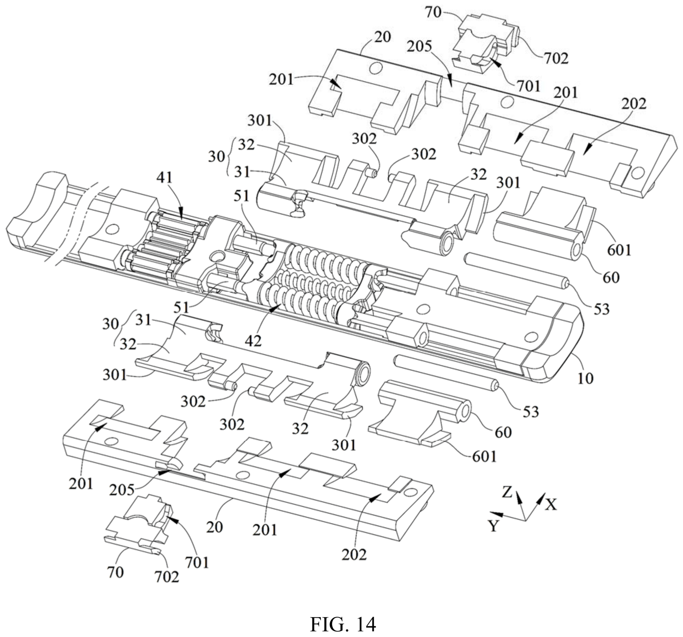

Referring to FIG. 12 to FIG. 14, FIG. 12 shows a three-dimensional schematic structural diagram of a rotating shaft mechanism 100 in an unfolded state according to some other embodiments of this application, FIG. 13 shows a three-dimensional schematic structural diagram of the rotating shaft mechanism 100 shown in FIG. 12 in a folded state, and FIG. 14 shows an exploded view of the rotating shaft mechanism 100 shown in FIG. 12.

In another possible implementation, in the second swing arm 60 and the connector 20 located on the same side of the bottom base 10, a second arc-shaped sliding portion 601 is arranged on the second swing arm 60, a second arc-shaped sliding fit portion 202 is arranged on the connector 20, and the second arc-shaped sliding portion 601 slidably fits the second arc-shaped sliding fit portion 202, so that the second swing arm 60 is rotatably connected to the connector 20.

The second arc-shaped sliding portion 601 and the second arc-shaped sliding fit portion 202 slide relative to each other along an arc-shaped track to implement relative rotation. Both the second arc-shaped sliding portion 601 and the second arc-shaped sliding fit portion 202 are arc-shaped structures, and may be arc-shaped structures in various forms, provided that the second arc-shaped sliding portion and the second arc-shaped sliding fit portion can slide relative to each other along the arc-shaped track to be in contact with and fit each other. The second arc-shaped sliding portion 601 and the second swing arm 60 may be an integral structure that is integrally formed, or may be separately formed and fixedly connected to each other. Similarly, the second arc-shaped sliding fit portion 202 and the connector 20 may be an integral structure that is integrally formed, or may be separately formed and fixedly connected to each other.

When the rotating shaft mechanism 100 switches from the unfolded state to the folded state, the connectors 20 located on the two sides of the bottom base 10 rotate close to each other, and the connectors 20 drive the first swing arms 30 and the second swing arms 60 to rotate relative to the bottom base 10; the first swing arms 30 located on the two sides of the bottom base 10 also rotate close to each other, at the same time, the first arc-shaped sliding portion 301 and the first arc-shaped sliding fit portion 201 slide relative to each other, to cause the connector 20 and the first swing arm 30 to rotate relative to each other, and the connector 20 approximately faces away from the bottom base 10 and moves away from the first swing arm 30, which may be considered as that a length of an assembly formed by the connector 20 and the first swing arm 30 is increased; and the second swing arms 60 located on the two sides of the bottom base 10 also rotate close to each other, at the same time, the second arc-shaped sliding portion 601 and the second arc-shaped sliding fit portion 202 slide relative to each other, to cause the connector 20 and the second swing arm 60 to rotate relative to each other, and the connector 20 approximately faces away from the bottom base 10 and moves away from the second swing arm 60, which may be considered as that a length of an assembly formed by the connector 20 and the second swing arm 60 is increased.

When the rotating shaft mechanism 100 switches from the folded state to the unfolded state, the connectors 20 located on the two sides of the bottom base 10 rotate away from each other, and the connectors 20 drive the first swing arms 30 and the second swing arms 60 to rotate relative to the bottom base 10; the first swing arms 30 located on the two sides of the bottom base 10 also rotate away from each other, at the same time, the first arc-shaped sliding portion 301 and the first arc-shaped sliding fit portion 201 slide relative to each other, to cause the connector 20 and the first swing arm 30 to rotate relative to each other, and the connector 20 approximately faces the bottom base 10 and moves close to the first swing arm 30, which may be considered as that the length of the assembly formed by the connector 20 and the first swing arm 30 is decreased; and the second swing arms 60 located on the two sides of the bottom base 10 also rotate away from each other, at the same time, the second arc-shaped sliding portion 601 and the second arc-shaped sliding fit portion 202 slide relative to each other, to cause the connector 20 and the second swing arm 60 to rotate relative to each other, and the connector 20 approximately faces the bottom base 10 and moves close to the second swing arm 60, which may be considered as that the length of the assembly formed by the connector 20 and the second swing arm 60 is decreased.

When the terminal device 10000 is an inner foldable terminal device, in a case that the rotating shaft mechanism 100 is in the folded state, an accommodating space configured to accommodate the foldable portion 2100 of the foldable screen 2000 may be formed between the second swing arms 60 located on the two sides of the bottom base 10. When the rotating shaft mechanism 100 switches from the unfolded state to the folded state, the connector 20 and the second swing arm 60 rotate relative to each other through relative sliding between the second arc-shaped sliding portion 601 and the second arc-shaped sliding fit portion 202, so that a rotation angle of the second swing arm 60 relative to the bottom base 10 may be smaller than a rotation angle of the connector 20 relative to the bottom base 10. Compared with fixed rotation angles of 90 degrees of the second swing arm 60 and the connector 20, this helps enlarge the accommodating space formed between the second swing arms 60 located on the two sides of the bottom base 10, and may reduce a possibility of interference between the second swing arm 60 and the foldable portion 2100.

It may be understood that, by changing positions of circle centers of the second arc-shaped sliding portion 601 and the second arc-shaped sliding fit portion 202, the rotation angle of the second swing arm 60 relative to the bottom base 10 in a process that the rotating shaft mechanism 100 rotates from the unfolded state to the folded state may be changed, so that the rotation angle of the second swing arm 60 may be designed according to an actual requirement. This is not uniquely limited in the embodiments of this application.

With such a setting, the second swing arm 60 is rotatably connected to the connector 20 through slidable fitting between the second arc-shaped sliding portion 601 and the second arc-shaped sliding fit portion 202, which may be considered as that the second swing arm 60 is rotatably connected to the connector 20 through a virtual shaft; and when the rotating shaft mechanism 100 switches between the unfolded state and the folded state, the rotation angle of the second swing arm 60 relative to the bottom base 10 and the rotation angle of the connector 20 relative to the bottom base 10 may be different. Therefore, when the rotating shaft mechanism 100 is used in the terminal device 10000, in a process that the terminal device 10000 switches from the unfolded state to the folded state, the rotation angle of the second swing arm 60 relative to the bottom base 10 may be designed according to a requirement and does not need to be the same as the rotation angle of the connector 20 relative to the bottom base 10, so that a possibility of interference between the second swing arm 60 and the foldable screen 2000 of the terminal device 10000 when the terminal device 10000 is in the folded state may be reduced. This provides a space for further reduction of a size of the rotating shaft mechanism 100, which is conducive to further miniaturization of the size of the rotating shaft mechanism 100 and a lightening and thinning design of the terminal device 10000.

Optionally, when the rotating shaft mechanism 100 switches from the unfolded state to the folded state, the rotation angle of the second swing arm 60 rotating relative to the bottom base 10 is smaller than 90 degrees. That is, the rotation angle of the second swing arm 60 relative to the bottom base 10 in a process of rotating from the unfolded state to the folded state is less than 90 degrees, for example, may be, but is not limited to, 50 degrees, 60 degrees, 65 degrees, 70 degrees, 73 degrees, 80 degrees, or 85 degrees.

Similarly, when the rotating shaft mechanism 100 switches from the folded state to the unfolded state, the rotation angle of the second swing arm 60 rotating relative to the bottom base 10 is also smaller than 90 degrees.

With such a setting, compared with that the rotation angle of the second swing arm 60 relative to the bottom base 10 in the process of rotating from the unfolded state to the folded state is greater than or equal to 90 degrees, a possibility of interference between the second swing arm 60 in the folded state and the foldable portion 2100 of the foldable screen 2000 may be reduced, so that a space is provided for further reduction of the size of the rotating shaft mechanism 100, which is conducive to further miniaturization of the size of the rotating shaft mechanism 100 and a lightening and thinning design of the terminal device 10000.

Optionally, referring to FIG. 12 to FIG. 14, one of the second arc-shaped sliding portion 601 and the second arc-shaped sliding fit portion 202 is an arc-shaped sliding rail, and the other is an arc-shaped sliding groove. FIG. 14 exemplarily shows a case that the second arc-shaped sliding portion 601 is an arc-shaped sliding rail and the second arc-shaped sliding fit portion 202 is an arc-shaped sliding groove. Certainly, the second arc-shaped sliding portion and the second arc-shaped sliding fit portion may alternatively be exchanged, that is, the second arc-shaped sliding portion 601 is an arc-shaped sliding groove, and the second arc-shaped sliding fit portion 202 is an arc-shaped sliding rail. The second arc-shaped sliding portion 601 is in surface contact with the second arc-shaped sliding fit portion 202. That is, the arc-shaped sliding rail may slide in the arc-shaped sliding groove along a groove wall of the arc-shaped sliding groove and be in surface contact with the groove wall of the arc-shaped sliding groove.

With such a setting, the arc-shaped sliding rail and the arc-shaped sliding groove slidably fit each other and are in surface contact, and compared with point contact and line contact, this helps improve the stability and reliability of relative sliding between the second arc-shaped sliding portion 601 and the second arc-shaped sliding fit portion 202, and further improves the stability of rotatable fitting between the second swing arm 60 and the connector 20.

In the foregoing embodiments, rotatable connection solutions between the second swing arm 60 and the connector 20 are described. However, fitting between the second swing arm 60 and the connector 20 is not limited to a rotatable connection, and the following exemplarily describes other solutions.

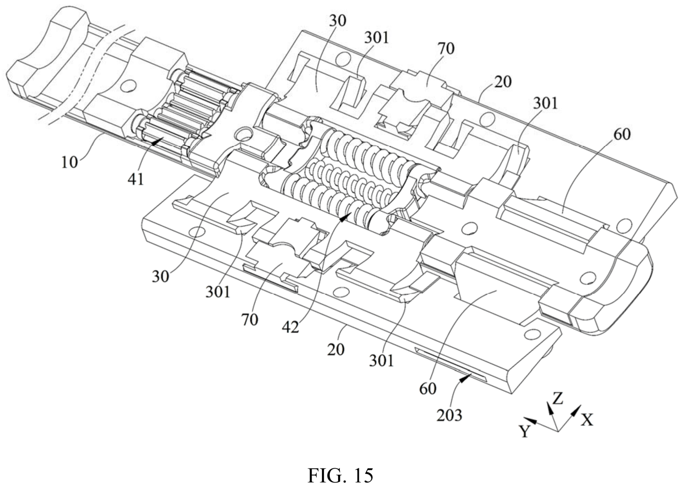

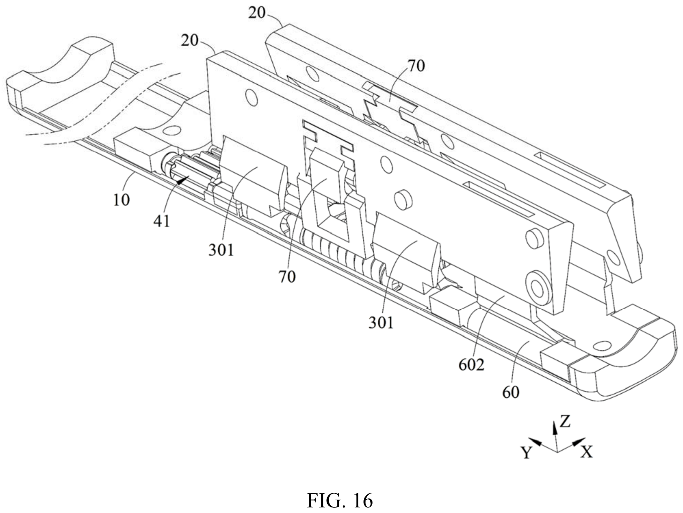

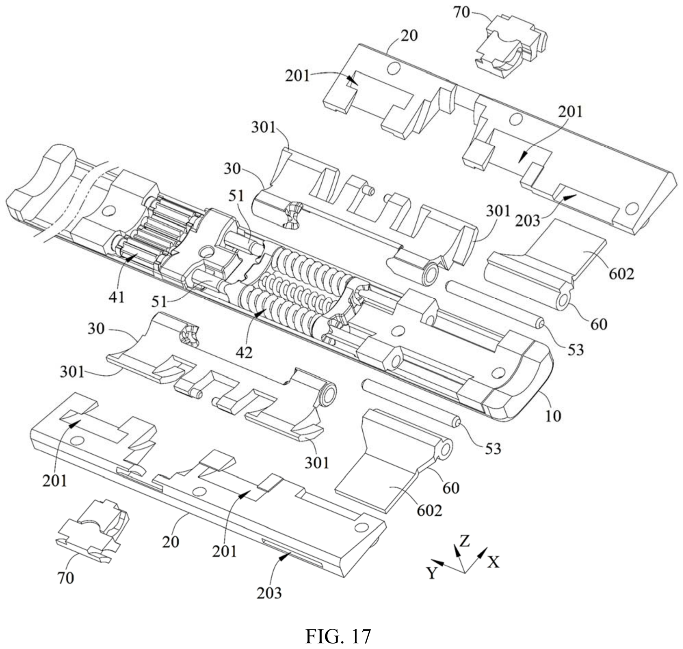

Referring to FIG. 15 to FIG. 17, FIG. 15 shows a three-dimensional schematic structural diagram of a rotating shaft mechanism 100 in an unfolded state according to still some other embodiments of this application, FIG. 16 shows a three-dimensional schematic structural diagram of the rotating shaft mechanism 100 shown in FIG. 15 in a folded state, and FIG. 17 shows an exploded view of the rotating shaft mechanism 100 shown in FIG. 15.

Optionally, in some other embodiments, the rotating shaft mechanism 100 further includes at least two second swing arms 60, the second swing arms 60 are respectively arranged on the two sides of the bottom base 10, and the second swing arms 60 are rotatably connected to the bottom base 10, where the second swing arm 60 and the connector 20 located on the same side of the bottom base 10 are slidably connected.

With such a setting, the second swing arm 60 may also be considered as a main swing arm, and the connector 20 is rotatably connected to the bottom base 10 through the first swing arm 30 and the second swing arm 60, also helping improve the stability of switching of the rotating shaft mechanism 100 between the unfolded state and the folded state.

Optionally, referring to FIG. 15 to FIG. 17, a first slidable connection portion 602 is arranged on one of the second swing arm 60 and the connector 20 located on the same side of the bottom base 10, a first linear sliding groove 203 is provided on the other, and the first slidable connection portion 602 slidably fits the first linear sliding groove 203.

It may be understood that, the first slidable connection portion 602 may be structures in a plurality of regular or irregular shapes, for example, may be, but is not limited to, a plate-shaped structure (this case is exemplarily shown in FIG. 17), a sheet-like structure, or a blocky structure, provided that the first slidable connection portion can fit the first linear sliding groove 203 to cause the first slidable connection portion and the first linear sliding groove to approximately slide relative to each other along a linear track. The first linear sliding groove 203 is a sliding groove having a linear path, so that the first slidable connection portion 602 approximately slides along the linear track in the first linear sliding groove 203.

With such a setting, when the rotating shaft mechanism 100 switches between the unfolded state and the folded state, the connector 20 and the second swing arm 60 rotate synchronously, and the first slidable connection portion 602 slides in the first linear sliding groove 203.

There are a plurality of feasible implementations for a rotatable connection manner between the second swing arm 60 and the bottom base 10, which are exemplarily described below.

In a possible implementation, referring to FIG. 7, FIG. 8, and FIG. 11, a third arc-shaped sliding portion 603 is arranged on the second swing arm 60, a third arc-shaped sliding fit portion 101 is arranged on the bottom base 10, and the third arc-shaped sliding portion 603 slidably fits the third arc-shaped sliding fit portion 101, so that the second swing arm 60 is rotatably connected to the bottom base 10.

The third arc-shaped sliding portion 603 and the third arc-shaped sliding fit portion 101 slide relative to each other along an arc-shaped track to implement relative rotation. Both the third arc-shaped sliding portion 603 and the third arc-shaped sliding fit portion 101 are arc-shaped structures, and may be arc-shaped structures in various forms, provided that the third arc-shaped sliding portion and the third arc-shaped sliding fit portion can slide relative to each other along the arc-shaped track to be in contact with and fit each other. The third arc-shaped sliding portion 603 and the second swing arm 60 may be an integral structure that is integrally formed, or may be separately formed and fixedly connected to each other. Similarly, the third arc-shaped sliding fit portion 101 and the bottom base 10 may be an integral structure that is integrally formed, or may be separately formed and fixedly connected to each other.

With such a setting, it may be considered that the second swing arm 60 is rotatably connected to the bottom base 10 through a virtual shaft, and compared with being rotatably connected through a physical shaft, this helps reduce a thickness dimension of a whole formed through fitting between the second swing arm 60 and the bottom base 10, which is conducive to reducing a thickness dimension of the rotating shaft mechanism 100 and a lightening and thinning design of the terminal device 10000.

Optionally, referring to FIG. 7 and FIG. 11, one of the third arc-shaped sliding portion 603 and the third arc-shaped sliding fit portion 101 is an arc-shaped sliding rail, and the other is an arc-shaped sliding groove. FIG. 11 exemplarily shows a case that the third arc-shaped sliding portion 603 is an arc-shaped sliding rail and the third arc-shaped sliding fit portion 101 is an arc-shaped sliding groove. Certainly, the third arc-shaped sliding portion and the third arc-shaped sliding fit portion may alternatively be exchanged, that is, the third arc-shaped sliding portion 603 is an arc-shaped sliding groove, and the third arc-shaped sliding fit portion 101 is an arc-shaped sliding rail. The third arc-shaped sliding portion 603 is in surface contact with the third arc-shaped sliding fit portion 101. That is, the arc-shaped sliding rail may slide in the arc-shaped sliding groove along a groove wall of the arc-shaped sliding groove and be in surface contact with the groove wall of the arc-shaped sliding groove.

With such a setting, the arc-shaped sliding rail and the arc-shaped sliding groove slidably fit each other and are in surface contact, and compared with point contact and line contact, this helps improve the stability and reliability of relative sliding between the third arc-shaped sliding portion 603 and the third arc-shaped sliding fit portion 101, and further improves the stability of rotatable fitting between the second swing arm 60 and the bottom base 10.

Optionally, referring to FIG. 7 and FIG. 11, when the second swing arm 60 is rotatably connected to the connector 20 located on the same side of the bottom base 10 through the second rotating shaft 52, this helps further improve the connection reliability, and further improves the reliability and stability of switching of the second swing arm 60 between the unfolded state and the folded state.

In another possible implementation, referring to FIG. 12 to FIG. 17, the rotating shaft mechanism 100 further includes a third rotating shaft 53, and the second swing arm 60 is rotatably connected to the bottom base 10 through the third rotating shaft 53.

It may be understood that, the third rotating shaft 53 may be a rotating shaft separately formed and arranged with the second swing arm 60 and the bottom base 10, a rotating shaft hole may be provided on the second swing arm 60 and the bottom base 10 respectively, and the third rotating shaft 53 may run through the rotating shaft hole on the second swing arm 60 and the rotating shaft hole on the bottom base 10, to implement a rotatable connection between the second swing arm 60 and the bottom base 10. This case is exemplarily shown in FIG. 12 and FIG. 14.

Certainly, the third rotating shaft 53 may alternatively be an integral structure that is integrally formed with the second swing arm 60, a rotating shaft hole is provided on the bottom base 10, and the third rotating shaft 53 rotatably fits the rotating shaft hole on the bottom base 10. Similarly, the third rotating shaft 53 may alternatively be an integral structure that is integrally formed with the bottom base 10, a rotating shaft hole is provided on the second swing arm 60, and the third rotating shaft 53 rotatably fits the rotating shaft hole on the second swing arm 60.

With such a setting, the second swing arm 60 and the bottom base 10 are rotatably connected through a physical shaft, and compared with being connected through a virtual shaft, the connection stability may be improved, and the reliability of switching of the rotating shaft mechanism 100 between the unfolded state and the folded state may be further improved.

In the foregoing embodiments, a case that the first swing arm 30 is a synchronization swing arm is described, but the first swing arm 30 is not limited to the synchronization swing arm. The following exemplarily describes a case that the first swing arm 30 is a main swing arm.

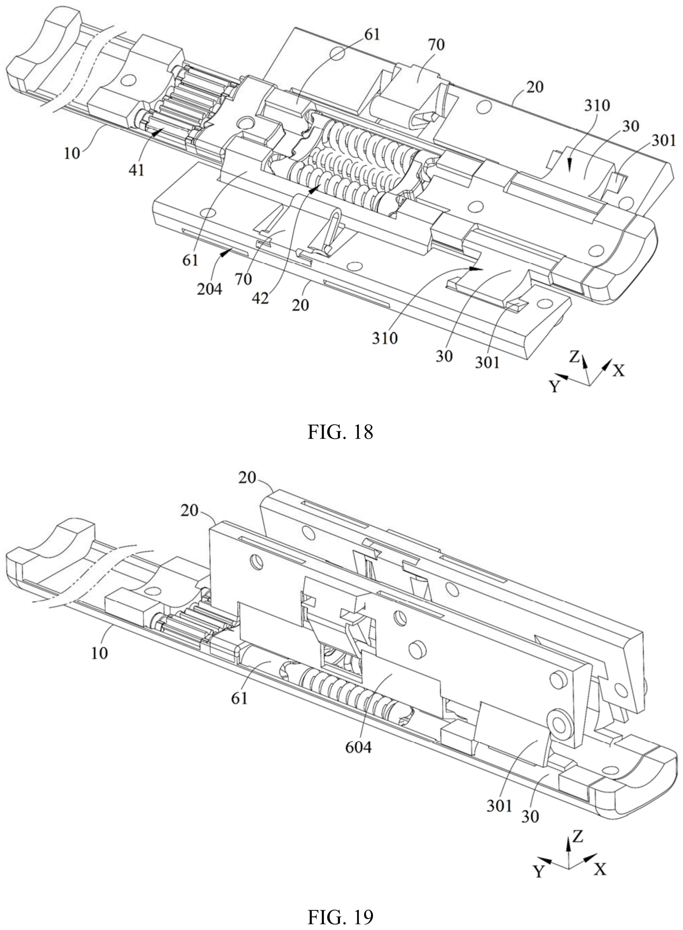

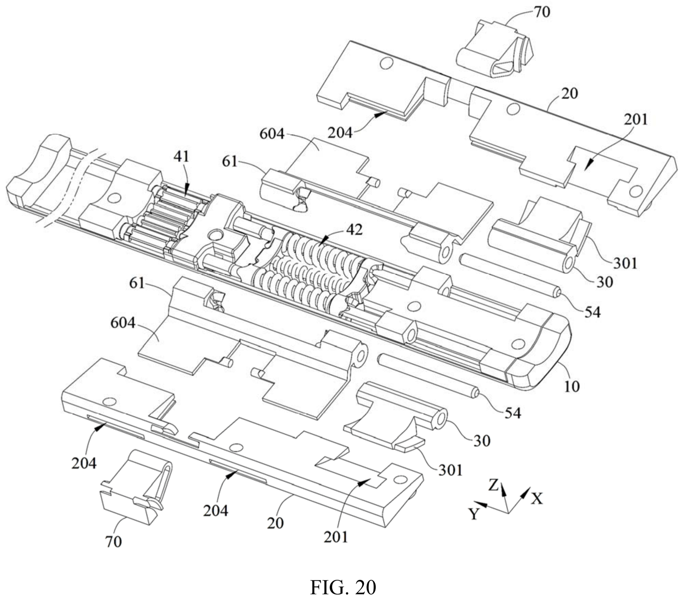

Referring to FIG. 18 to FIG. 20, FIG. 18 shows a three-dimensional schematic structural diagram of a rotating shaft mechanism 100 in an unfolded state according to yet some other embodiments of this application, FIG. 19 shows a three-dimensional schematic structural diagram of the rotating shaft mechanism 100 shown in FIG. 18 in a folded state, and FIG. 20 shows an exploded view of the rotating shaft mechanism 100 shown in FIG. 18.

In some embodiments, the first swing arm 30 is a main swing arm rather than a synchronization swing arm or a secondary swing arm. The first swing arm 30 is rotatably connected to the connector 20 through slidable fitting between the first arc-shaped sliding portion 301 and the first arc-shaped sliding fit portion 201, so that a rotation angle of the first swing arm 30 in the form of the main swing arm in a process of rotating from the unfolded state to the folded state may be smaller than 90 degrees. That is, a possibility of interference between the main swing arm in the folded state and the foldable screen 2000 may be reduced, which is conducive to further miniaturization of the rotating shaft mechanism 100 and a lightening and thinning design of the terminal device 10000.

Optionally, in some embodiments, referring to FIG. 18 to FIG. 20, the rotating shaft mechanism 100 further includes at least two third swing arms 61, the third swing arms 61 are respectively arranged on the two sides of the bottom base 10, and the third swing arms 61 are rotatably connected to the bottom base 10, where the third swing arm 61 and the connector 20 located on the same side of the bottom base 10 are slidably connected.

It may be understood that, that the third swing arms 61 are respectively arranged on the two sides of the bottom base 10 refers to that the third swing arms 61 are arranged on the two sides of the bottom base 10, but there may be one or more third swing arms 61 on each side, and quantities of the third swing arms 61 on the two sides of the bottom base 10 may be the same or different.

The third swing arm 61 may be connected to the bottom base 10 in various rotatable connection manners, so that the third swing arm 61 can rotate relative to the bottom base 10 while being connected to the bottom base 10. Rotation axes of the third swing arms 61 rotating relative to the bottom base 10 may be set to be approximately parallel to each other. Certainly, a specific deviation may also exist between the axes but the axes are nearly parallel to each other, that is, existence of a manufacturing error, an assembly error, or the like may be allowed. The rotation axis of the third swing arm 61 rotating relative to the bottom base 10 may be approximately parallel to the length direction of the bottom base 10.

The third swing arm 61 may be swing arm structures in various shapes, and may be set according to an actual requirement. This is not limited in the embodiments of this application. The third swing arms 61 on the two sides of the bottom base 10 are mainly configured to rotate relative to the bottom base 10, and are both referred to as the third swing arm for ease of description. However, shapes and structures of the third swing arms 61 on the two sides of the bottom base 10 may be the same or different.

With such a setting, the third swing arm 61 may also be considered as a synchronization swing arm or a secondary swing arm, and the connector 20 is rotatably connected to the bottom base 10 through the first swing arm 30 and the third swing arm 61, also helping improve the stability of switching of the rotating shaft mechanism 100 between the unfolded state and the folded state.

Optionally, referring to FIG. 18, the third swing arms 61 located on the two sides of the bottom base 10 may be connected through a synchronization assembly, and the synchronization assembly may use a structure that is the same as or similar to the synchronization assembly 41 described in the foregoing embodiments. Details are not described herein.

Optionally, referring to FIG. 18, it may be set that a damping assembly is connected to the third swing arm 61 to provide a damping force for the third swing arm 61. The damping assembly may use a structure that is the same as or similar to the damping assembly 42 described in the foregoing embodiments. Details are not described herein.

Optionally, referring to FIG. 18 to FIG. 20, a second slidable connection portion 604 is arranged on one of the third swing arm 61 and the connector 20 located on the same side of the bottom base 10, a second linear sliding groove 204 is provided on the other, and the second slidable connection portion 604 slidably fits the second linear sliding groove 204. FIG. 18 and FIG. 20 exemplarily show a case that the second slidable connection portion 604 is arranged on the third swing arm 61 and the second linear sliding groove 204 is provided on the connector 20, and certainly, the third swing arm and the connector may alternatively be exchanged.

It may be understood that, the second slidable connection portion 604 may be structures in a plurality of regular or irregular shapes, for example, may be, but is not limited to, a plate-shaped structure (this case is exemplarily shown in FIG. 20), a sheet-like structure, or a blocky structure, provided that the second slidable connection portion can fit the second linear sliding groove 204 to cause the second slidable connection portion and the second linear sliding groove to approximately slide relative to each other along a linear track. The second linear sliding groove 204 is a sliding groove having a linear path, so that the second slidable connection portion 604 approximately slides along the linear track in the second linear sliding groove 204.

With such a setting, when the rotating shaft mechanism 100 switches between the unfolded state and the folded state, the connector 20 and the third swing arm 61 rotate synchronously, and the second slidable connection portion 604 slides in the second linear sliding groove 204.

Optionally, referring to FIG. 18 and FIG. 20, the rotating shaft mechanism 100 further includes a fourth rotating shaft 54, and the first swing arm 30 is rotatably connected to the bottom base 10 through the fourth rotating shaft 54.

It may be understood that, the fourth rotating shaft 54 may be a rotating shaft separately formed and arranged with the first swing arm 30 and the bottom base 10, a rotating shaft hole may be provided on the first swing arm 30 and the bottom base 10 respectively, and the fourth rotating shaft 54 may run through the rotating shaft hole on the first swing arm 30 and the rotating shaft hole on the bottom base 10, to implement a rotatable connection between the first swing arm 30 and the bottom base 10. This case is exemplarily shown in FIG. 20.

Certainly, the fourth rotating shaft 54 may alternatively be an integral structure that is integrally formed with the first swing arm 30, a rotating shaft hole is provided on the bottom base 10, and the fourth rotating shaft 54 rotatably fits the rotating shaft hole on the bottom base 10. Similarly, the fourth rotating shaft 54 may alternatively be an integral structure that is integrally formed with the bottom base 10, a rotating shaft hole is provided on the first swing arm 30, and the fourth rotating shaft 54 rotatably fits the rotating shaft hole on the first swing arm 30.

With such a setting, the first swing arm 30 and the bottom base 10 are rotatably connected through a physical shaft, and compared with being connected through a virtual shaft, the connection stability may be improved, and the reliability of switching of the rotating shaft mechanism 100 between the unfolded state and the folded state may be further improved.

Optionally, the third swing arm 61 may alternatively be rotatably connected to the bottom base 10 through a physical shaft, helping improve the connection reliability.

Referring to FIG. 7, FIG. 9, FIG. 11, and FIG. 18, to provide more accommodating space for the foldable portion 2100 of the foldable screen 2000 when the rotating shaft mechanism 100 is in the folded state, in some embodiments, an arc-shaped surface 310 is concavely arranged on the first swing arm 30. When the rotating shaft mechanism 100 is in the folded state, the arc-shaped surface 310 on the first swing arm 30 located on one side of the bottom base 10 faces the first swing arm 30 located on the other side of the bottom base 10, that is, the arc-shaped surfaces 310 on the first swing arms 30 located on the two sides of the bottom base 10 are arranged opposite to each other, so that an accommodating space configured to accommodate the foldable portion 2100 can be formed between the arc-shaped surfaces 310 on the first swing arms 30 located on the two sides of the bottom base 10, thereby further reducing a possibility of interference with the foldable portion 2100.

In some embodiments, referring to FIG. 7 to FIG. 17, the rotating shaft mechanism 100 further includes at least two fourth swing arms 70, and the fourth swing arms 70 are respectively arranged on the two sides of the bottom base 10, where the fourth swing arm 70 is rotatably connected to the connector 20 located on the same side of the bottom base 10. A track groove 701 is provided on one of the fourth swing arm 70 and the first swing arm 30 located on the same side of the bottom base 10, a sliding member 302 is arranged on the other, and the sliding member 302 is in high pair cooperation with the track groove 701. FIG. 11 exemplarily shows a case that the track groove 701 is provided on the fourth swing arm 70 and the sliding member 302 is arranged on the first swing arm 30.

It may be understood that, that the fourth swing arms 70 are respectively arranged on the two sides of the bottom base 10 refers to that the fourth swing arms 70 are arranged on the two sides of the bottom base 10, but there may be one or more fourth swing arms 70 on each side, and quantities of the fourth swing arms 70 on the two sides of the bottom base 10 may be the same or different. The fourth swing arm 70 may be connected to the connector 20 located on the same side of the bottom base 10 in various rotatable connection manners.

That the sliding member 302 is in high pair cooperation with the track groove 701 refers to that the sliding member 302 is in point contact or line contact with a groove wall of the track groove 701, so that the sliding member 302 may slide along the groove wall of the track groove 701 and rotate in the track groove 701. The sliding member 302 may be structures in various regular or irregular shapes, for example, may be, but is not limited to, a columnar structure (this case is exemplarily shown in FIG. 11), a rod-shaped structure, or a plate-shaped structure. The sliding member 302 and one of the fourth swing arm 70 and the first swing arm 30 connected to the sliding member may be an integral structure that is integrally formed, and certainly, may alternatively be separately formed and connected to each other. FIG. 11 exemplarily shows a case that the sliding member 302 is arranged on the first swing arm 30 and the sliding member and the first swing arm are an integral structure.

With such a setting, when the rotating shaft mechanism 100 switches between the unfolded state and the folded state, the sliding member 302 may slide and rotate in the track groove 701, the fourth swing arm 70 may slide and rotate relative to the first swing arm 30, and the fourth swing arm 70 may rotate relative to the connector 20, for ease of controlling movement of the fourth swing arm 70. When the rotating shaft mechanism 100 is used in the terminal device 10000, a support member arranged on the fourth swing arm 70 may move simultaneously along with the fourth swing arm 70, so that the support member supports the foldable portion 2100 of the foldable screen 2000 in the unfolded state, and the support member encircles an accommodating space configured to accommodate the foldable portion 2100 in the folded state.

For example, referring to FIG. 9 and FIG. 10, when the rotating shaft mechanism 100 switches from the unfolded state to the folded state, in the first swing arm 30, the fourth swing arm 70, and the connector 20 located on the same side of the bottom base 10, the first swing arm 30 rotates relative to the connector 20, and the first swing arm 30 and the fourth swing arm 70 slide and rotate relative to each other, that is, when the first swing arm 30 rotates relative to the connector 20, the fourth swing arm 70 is driven to slide and rotate relative to the first swing arm 30 (the fourth swing arm 70 is rotatably connected to the connector 20, so that the fourth swing arm 70 is not easily jammed when sliding and rotating relative to the first swing arm 30), so that when the rotating shaft mechanism 100 is in the folded state, the fourth swing arms 70 located on the two sides of the bottom base 10 are arranged opposite to each other and an angle a (the angle a is greater than 0 degree and smaller than 180 degrees, and may be, for example, an acute angle, a right angle, or an obtuse angle) is formed, a distance between edges close to the bottom base 10 of the fourth swing arms 70 located on the two sides of the bottom base 10 is a first distance, a distance between edges away from the bottom base 10 of the fourth swing arms 70 located on the two sides of the bottom base 10 is a second distance, and the first distance is greater than the second distance. In this way, when the support member is arranged on the fourth swing arm 70, in a case that the terminal device 10000 is in the folded state, the foldable portion 2100 of the foldable screen 2000 may be in a shape of a droplet due to the support member.

Optionally, in some embodiments, referring to FIG. 7 and FIG. 11, in the fourth swing arm 70 and the connector 20 located on the same side of the bottom base 10, a fourth arc-shaped sliding portion 702 is arranged on the fourth swing arm 70, a fourth arc-shaped sliding fit portion 205 is arranged on the connector 20, and the fourth arc-shaped sliding portion 702 slidably fits the fourth arc-shaped sliding fit portion 205, so that the fourth swing arm 70 is rotatably connected to the connector 20.

The fourth arc-shaped sliding portion 702 and the fourth arc-shaped sliding fit portion 205 slide relative to each other along an arc-shaped track to implement relative rotation. Both the fourth arc-shaped sliding portion 702 and the fourth arc-shaped sliding fit portion 205 are arc-shaped structures, and may be arc-shaped structures in various forms, provided that the fourth arc-shaped sliding portion and the fourth arc-shaped sliding fit portion can slide relative to each other along the arc-shaped track to be in contact with and fit each other. The fourth arc-shaped sliding portion 702 and the fourth swing arm 70 may be an integral structure that is integrally formed, or may be separately formed and fixedly connected to each other. Similarly, the fourth arc-shaped sliding fit portion 205 and the connector 20 may be an integral structure that is integrally formed, or may be separately formed and fixedly connected to each other.

With such a setting, it may be considered that the fourth swing arm 70 is rotatably connected to the connector 20 through a virtual shaft, which helps reduce a size of a whole formed by the fourth swing arm 70 and the connector 20 in a case of obtaining a required rotation radius.

Optionally, one of the fourth arc-shaped sliding portion 702 and the fourth arc-shaped sliding fit portion 205 is an arc-shaped sliding rail, and the other is an arc-shaped sliding groove. FIG. 11 exemplarily shows a case that the fourth arc-shaped sliding portion 702 is an arc-shaped sliding rail and the fourth arc-shaped sliding fit portion 205 is an arc-shaped sliding groove, and certainly, the fourth arc-shaped sliding portion and the fourth arc-shaped sliding fit portion may alternatively be exchanged. The fourth arc-shaped sliding portion 702 is in surface contact with the fourth arc-shaped sliding fit portion 205, and compared with point contact and line contact, this helps improve the stability and reliability of relative sliding between the fourth arc-shaped sliding portion 702 and the fourth arc-shaped sliding fit portion 205, and further improves the reliability of rotatable fitting between the fourth swing arm 70 and the connector 20.

Optionally, the rotating shaft mechanism 100 further includes a support member, and the support member is connected to the fourth swing arm 70 to move along with movement of the fourth swing arm 70. When the rotating shaft mechanism 100 is in the folded state, the support member is located between the first swing arms 30 respectively located on the two sides of the bottom base 10.

It may be understood that, the support member is a structural member configured to support the foldable portion 2100 of the foldable screen 2000 and shape the foldable portion 2100 in the folded state, and may be structures in a plurality of shapes, for example, may be a plate-shaped structure or a sheet-like structure, to help form a support surface with a specific area to better support the foldable portion 2100. Certainly, the support member may alternatively be a structure in another shape. The support member may be a rigid support member. In this case, there may be a plurality of support members, and the support members are respectively located on the two sides of the bottom base 10. The support member and the fourth swing arm 70 located on the same side of the bottom base 10 may be fixedly connected, and the support member is also referred to as a door gate in this case. Certainly, the support member may also be a flexible support member to be bendable. In this case, there may be one support member, and two sides of the support member are respectively fixedly connected to the fourth swing arms 70 located on the two sides of the bottom base 10.

When the terminal device 10000 is in the unfolded state, the support member may be approximately flat, to support the flat foldable portion 2100 of the foldable screen 2000. When the terminal device 10000 is in the folded state, an accommodating space configured to accommodate the foldable portion 2100 may be formed on an inner side of the support member. The support member is located between the foldable portion 2100 and the first swing arm 30.

Optionally, in some embodiments, referring to FIG. 7 and FIG. 11, the first swing arm 30 includes a first arm portion 31 and at least two second arm portions 32. The first arm portion 31 is rotatably connected to the bottom base 10. The second arm portions 32 are connected to the first arm portion 31, and are arranged sequentially along a direction of a rotation axis of the first arm portion 31 rotating relative to the bottom base 10. In the first swing arm 30 and the connector 20 located on the same side of the bottom base 10, a first arc-shaped sliding portion 301 is arranged on each second arm portion 32 of the first swing arm 30, a plurality of first arc-shaped sliding fit portions 201 are arranged on the connector 20, and the first arc-shaped sliding portions 301 slidably fit the first arc-shaped sliding fit portions 201 in a one-to-one correspondence manner. Each pair of the first arc-shaped sliding portion 301 and the first arc-shaped sliding fit portion 201 slidably fitting each other may form a slidable fitting group, and the first swing arm 30 may slidably fit the connector 20 through a plurality of slidable fitting groups, which is conducive to improving the reliability of a rotatable connection between the first swing arm 30 and the connector 20, and further improving the reliability of the rotating shaft mechanism 100.

Optionally, referring to FIG. 7 and FIG. 11, in the fourth swing arm 70 and the first swing arm 30 located on the same side of the bottom base 10, the fourth swing arm 70 is located between two adjacent second arm portions 32 of the first swing arm 30. In this way, structure arrangement of the second arm portion 32 and the fourth swing arm 70 on the same side of the bottom base 10 becomes more uniform, which is conducive to improving the stability of the first swing arm 30 and the fourth swing arm 70 during rotation, and is conducive to improving the structure compactness.

It should be noted that, in some other embodiments, referring to FIG. 18 to FIG. 20, when the first swing arm 30 is a main swing arm, the fourth swing arm 70 may also be arranged between the third swing arm 61 and the connector 20. Specifically, the fourth swing arm 70 may be rotatably connected to the connector 20 located on the same side of the bottom base 10, and the fourth swing arm 70 and the third swing arm 61 located on the same side of the bottom base 10 may be in high pair cooperation with each other through a track groove and a sliding member. In this way, movement of the fourth swing arm 70 can also be controlled.

The foregoing description is merely specific implementations of this application, but is not intended to limit the protection scope of this application. Any variation or replacement readily figured out by a person skilled in the art within the technical scope disclosed in this application shall fall within the protection scope of this application.

## Claims

1. A rotating shaft mechanism, wherein the rotating shaft mechanism comprises:
a bottom base;
at least two connectors, respectively arranged on two sides of the bottom base; and
at least two first swing arms, respectively arranged on the two sides of the bottom base and rotatably connected to the bottom base, wherein
in the first swing arm and the connector located on the same side of the bottom base, a first arc-shaped sliding portion is arranged on the first swing arm, a first arc-shaped sliding fit portion is arranged on the connector, and the first arc-shaped sliding portion slidably fits the first arc-shaped sliding fit portion, so that the first swing arm is rotatably connected to the connector.

2. The rotating shaft mechanism according to claim 1, wherein the connectors located on the two sides of the bottom base rotate relative to each other based on the bottom base, to cause the rotating shaft mechanism to switch between an unfolded state and a folded state; and when the rotating shaft mechanism switches from the unfolded state to the folded state, the connector drives the first swing arm to rotate relative to the bottom base, and the first arc-shaped sliding portion and the first arc-shaped sliding fit portion slide relative to each other to cause the connector and the first swing arm to rotate relative to each other, wherein
when the rotating shaft mechanism switches from the unfolded state to the folded state, a rotation angle of the first swing arm rotating relative to the bottom base is less than 90 degrees.

3. The rotating shaft mechanism according to claim 1 or 2, wherein one of the first arc-shaped sliding portion and the first arc-shaped sliding fit portion is an arc-shaped sliding rail, and the other is an arc-shaped sliding groove; and the first arc-shaped sliding portion is in surface contact with the first arc-shaped sliding fit portion.

4. The rotating shaft mechanism according to any one of claims 1 to 3, wherein the first swing arm is a synchronization swing arm.

5. The rotating shaft mechanism according to claim 4, wherein the rotating shaft mechanism further comprises a synchronization assembly, and the first swing arms located on the two sides of the bottom base are connected through the synchronization assembly.

6. The rotating shaft mechanism according to any one of claim 4 or 5, wherein the rotating shaft mechanism further comprises a damping assembly, and the damping assembly is connected to the first swing arm and configured to provide a damping force for the first swing arm.

7. The rotating shaft mechanism according to any one of claims 4 to 6, wherein the rotating shaft mechanism further comprises a first rotating shaft, and the first swing arm is rotatably connected to the bottom base through the first rotating shaft.

8. The rotating shaft mechanism according to any one of claims 4 to 7, wherein the rotating shaft mechanism further comprises at least two second swing arms, the second swing arms are respectively arranged on the two sides of the bottom base, and the second swing arms are rotatably connected to the bottom base, wherein the second swing arm and the connector located on the same side of the bottom base are rotatably connected.

9. The rotating shaft mechanism according to claim 8, wherein the rotating shaft mechanism further comprises a second rotating shaft, and the second swing arm and the connector located on the same side of the bottom base are rotatably connected through the second rotating shaft.

10. The rotating shaft mechanism according to claim 8, wherein in the second swing arm and the connector located on the same side of the bottom base, a second arc-shaped sliding portion is arranged on the second swing arm, a second arc-shaped sliding fit portion is arranged on the connector, and the second arc-shaped sliding portion slidably fits the second arc-shaped sliding fit portion, so that the second swing arm is rotatably connected to the connector.

11. The rotating shaft mechanism according to claim 10, wherein the connectors located on the two sides of the bottom base rotate relative to each other based on the bottom base, to cause the rotating shaft mechanism to switch between the unfolded state and the folded state; and when the rotating shaft mechanism switches from the unfolded state to the folded state, the connector drives the first swing arm and the second swing arm to rotate relative to the bottom base, the first arc-shaped sliding portion and the first arc-shaped sliding fit portion slide relative to each other to cause the connector and the first swing arm to rotate relative to each other, and the second arc-shaped sliding portion and the second arc-shaped sliding fit portion slide relative to each other to cause the connector and the second swing arm to rotate relative to each other, wherein
when the rotating shaft mechanism switches from the unfolded state to the folded state, a rotation angle of the second swing arm rotating relative to the bottom base is less than 90 degrees.

12. The rotating shaft mechanism according to claim 10 or 11, wherein one of the second arc-shaped sliding portion and the second arc-shaped sliding fit portion is an arc-shaped sliding rail, and the other is an arc-shaped sliding groove; and the second arc-shaped sliding portion is in surface contact with the second arc-shaped sliding fit portion.

13. The rotating shaft mechanism according to any one of claims 4 to 7, wherein the rotating shaft mechanism further comprises at least two second swing arms, the second swing arms are respectively arranged on the two sides of the bottom base, and the second swing arms are rotatably connected to the bottom base, wherein the second swing arm and the connector located on the same side of the bottom base are slidably connected.

14. The rotating shaft mechanism according to claim 13, wherein a first slidable connection portion is arranged on one of the second swing arm and the connector located on the same side of the bottom base, a first linear sliding groove is provided on the other, and the first slidable connection portion slidably fits the first linear sliding groove.

15. The rotating shaft mechanism according to any one of claims 8 to 14, wherein a third arc-shaped sliding portion is arranged on the second swing arm, a third arc-shaped sliding fit portion is arranged on the bottom base, and the third arc-shaped sliding portion slidably fits the third arc-shaped sliding fit portion, so that the second swing arm is rotatably connected to the bottom base.

16. The rotating shaft mechanism according to claim 15, wherein one of the third arc-shaped sliding portion and the third arc-shaped sliding fit portion is an arc-shaped sliding rail, and the other is an arc-shaped sliding groove; and the third arc-shaped sliding portion is in surface contact with the third arc-shaped sliding fit portion.

17. The rotating shaft mechanism according to any one of claims 8 to 14, wherein the rotating shaft mechanism further comprises a third rotating shaft, and the second swing arm is rotatably connected to the bottom base through the third rotating shaft.

18. The rotating shaft mechanism according to any one of claims 1 to 3, wherein the first swing arm is a main swing arm.

19. The rotating shaft mechanism according to claim 18, wherein the rotating shaft mechanism further comprises at least two third swing arms, the third swing arms are respectively arranged on the two sides of the bottom base, and the third swing arms are rotatably connected to the bottom base, wherein the third swing arm and the connector located on the same side of the bottom base are slidably connected.

20. The rotating shaft mechanism according to claim 19, wherein a second slidable connection portion is arranged on one of the third swing arm and the connector located on the same side of the bottom base, a second linear sliding groove is provided on the other, and the second slidable connection portion slidably fits the second linear sliding groove.

21. The rotating shaft mechanism according to any one of claims 18 to 20, wherein the rotating shaft mechanism further comprises a fourth rotating shaft, and the first swing arm is rotatably connected to the bottom base through the fourth rotating shaft.

22. The rotating shaft mechanism according to any one of claims 1 to 21, wherein the connectors located on the two sides of the bottom base rotate relative to each other based on the bottom base, to cause the rotating shaft mechanism to switch between the unfolded state and the folded state;
an arc-shaped surface is concavely arranged on the first swing arm; and when the rotating shaft mechanism is in the folded state, the arc-shaped surface on the first swing arm located on one side of the bottom base faces the first swing arm located on the other side of the bottom base.

23. The rotating shaft mechanism according to any one of claims 1 to 22, wherein the rotating shaft mechanism further comprises at least two fourth swing arms, and the fourth swing arms are respectively arranged on the two sides of the bottom base; the fourth swing arm is rotatably connected to the connector located on the same side of the bottom base; and a track groove is provided on one of the fourth swing arm and the first swing arm located on the same side of the bottom base, a sliding member is arranged on the other, and the sliding member is in high pair cooperation with the track groove.

24. The rotating shaft mechanism according to claim 23, wherein in the fourth swing arm and the connector located on the same side of the bottom base, a fourth arc-shaped sliding portion is arranged on the fourth swing arm, a fourth arc-shaped sliding fit portion is arranged on the connector, and the fourth arc-shaped sliding portion slidably fits the fourth arc-shaped sliding fit portion, so that the fourth swing arm is rotatably connected to the connector.

25. The rotating shaft mechanism according to claim 23 or 24, wherein the rotating shaft mechanism further comprises a support member, and the support member is connected to the fourth swing arm;
the connectors located on the two sides of the bottom base rotate relative to each other based on the bottom base, to cause the rotating shaft mechanism to switch between the unfolded state and the folded state; and when the rotating shaft mechanism is in the folded state, the support member is located between the first swing arms located on the two sides of the bottom base.

26. The rotating shaft mechanism according to any one of claims 23 to 25, wherein the first swing arm comprises:
a first arm portion, rotatably connected to the bottom base; and
at least two second arm portions, connected to the first arm portion and arranged sequentially along a direction of a rotation axis of the first arm portion, wherein
in the first swing arm and the connector located on the same side of the bottom base, a first arc-shaped sliding portion is arranged on each second arm portion of the first swing arm, a plurality of first arc-shaped sliding fit portions are arranged on the connector, and the first arc-shaped sliding portions slidably fit the first arc-shaped sliding fit portions in a one-to-one correspondence manner; and
in the fourth swing arm and the first swing arm located on the same side of the bottom base, the fourth swing arm is located between two adjacent second arm portions of the first swing arm.

27. A terminal device, wherein the terminal device comprises:
a foldable device, comprising a first housing, a second housing, and the rotating shaft mechanism according to any one of claims 1 to 26, wherein the first housing is connected to the connector on one side of the bottom base, and the second housing is connected to the connector on the other side of the bottom base; and
a foldable screen, arranged on the first housing and the second housing, wherein a position of a foldable portion of the foldable screen corresponds to a position of the rotating shaft mechanism.
